# EUROPEAN PATENT SPECIFICATION

(11) **EP 4 626 974 B1**
(45) Date of publication and mention of the grant of the patent: **02.12.2026**
(21) Application number: 24704475.3
(22) Date of filing: 13.02.2024
(51) Int. Cl.: C08L 23/14, C08F 8/46, C08F 255/02, C08F 299/02, C08J 3/00, C08J 3/20, C08L 23/28

(54) **PROCESS TO PRODUCE POLYMER COMPOSITIONS COMPRISING POLYPROPYLENE**
VERFAHREN ZUR HERSTELLUNG VON POLYPROPYLEN ENTHALTENDEN POLYMERZUSAMMENSETZUNGEN
PROCÉDÉ DE PRODUCTION DE COMPOSITIONS POLYMÈRES COMPRENANT DU POLYPROPYLÈNE

(30) Priority: 14.02.2023 EP 23315028
(43) Date of publication of application: 08.10.2025
(73) Proprietor: TotalEnergies OneTech, 92400 Courbevoie (FR); Université Claude Bernard Lyon 1 (UCBL), 69100 Villeurbanne (FR); Centre National de la Recherche Scientifique (CNRS), 75016 Paris (FR); Université Jean Monnet Saint-Étienne, 42023 Saint-Étienne Cedex 2 (FR); Institut National des Sciences Appliquées de Lyon (INSA Lyon), 69621 Villeurbanne Cedex (FR)
(72) Inventor: LHOST, Olivier, 7181 Seneffe (BE); NAVEZ, Pascal, 7181 Seneffe (BE); TROLEZ, Yves, 7181 Seneffe (BE); CASSAGNAU, Philippe, 69622 Villeurbanne (FR); ABOU-TAHA, Mohammad, 01630 Saint Genis Pouilly (FR); DELAGE, Karim, 69100 Villeurbanne (FR)
(74) Representative: Mellet, Valérie Martine
(86) International application number: PCT/EP2024/053594
(87) International publication number: WO 2024/170550

(56) References cited:
- EP-A1- 0 547 824
- WO-A1-2022/200095
- CN-A- 109 012 755
- CN-A- 109 122 448
- CN-A- 109 852 080
- CN-B- 102 030 960
- US-A1- 2006 025 526

## Description

### Technical Field

The present disclosure relates to polymer compositions comprising polypropylene and one or more materials, produced with the addition of a compatibilizer.

### Technical Background

Polymer compositions comprising polypropylene and materials are of particular interest. For example, in compositions comprising polypropylene (PP) and polyamides (PA), polyamides generally exhibit good strength and resistance to hydrocarbon solvents, thus by blending new properties combinations can be reached. As another example, ethylene vinyl alcohol (EVOH) provides barrier properties so that polymer compositions comprising PP and EVOH are highly desirable in packaging. Also, polymer compositions comprising PP and cellulose derivatives are searched to improve the degradability of plastics.

CN 102 030 960 B discloses a preparation method of high-melt-strength polyolefin comprising a hybrid long branch-chain structure, comprising the following steps of: (1) weighting 100 parts by weight of polar monomer grafted polypropylene (a component A) with a grafting rate which is greater than or equal to 0.3 percent by weight, 5-30 parts by weight of polar monomer grafted polyethylene (a component B) with a grafting rate which is greater than or equal to 0.3 percent by weight, 1-10 parts by weight of amine or alcohol compound, 0-0.5 part by weight of antioxidant and 0-0.5 part by weight of light and heat stabilizing agent; (2) diluting the amine or alcohol compound into 20-80 percent by weight of solution by alcohol and/or ketone; (3) adding the component A, the component B, the antioxidant and the heat stabilizing agent into an extruder through a feeding hole, respectively adding the solution obtained in the step (2) and supercritical carbon dioxide from a first side line and a second side line, and melting and extruding to prepare the high-melt-strength polyolefin comprising the hybrid long branch-chain structure.

US 2006/025526 A1 describes functionalized propylene polymer compositions useful as coupling/compatibilizing agents. The compositions are a mixture of two different functionalized propylene polymers. Polypropylene composites containing fillers and/or non-compatible resins and formulated using the mixed functionalized coupling/compatibilizing agents are also provided and comprise (i) 30 to 98.995 weight percent polypropylene base resin; (ii) 1 to 70 weight percent dispersed component which is a polymer incompatible with said polypropylene base resin selected from the group consisting of ethylene-vinyl alcohol copolymer, polyamide, polyester, polyvinylchloride, polyvinylidenedichloride, ethylene-carbon monoxide copolymer and terpolymer, polycarbonate, polyether, high impact polystyrene, styrene-acrylonitrile copolymer and acrylonitrile-butadiene-styrene terpolymer; and (iii) 0.005 to 10 weight percent functionalized propylene polymer composition comprising (a) 5 to 95 weight percent, based on the weight of the functionalized composition, propylene-ethylene impact copolymer grafted with maleic anhydride and having a graft to melt flow rate ratio of 0.5 or above, said impact copolymer being a reactor-made intimate mixture of propylene homopolymer and ethylene-propylene copolymer rubber produced in a gas-phase, stirred-bed, multi-stage polymerization process, and (b) 95 to 5 weight percent, based on the weight of the functionalized composition, propylene homopolymer grafted with maleic anhydride.

CN 109 012 755 A discloses method for preparing a semi-submersible lawn for treating black and smelly rivers, wherein the lawn includes a lawn base cloth and artificial grass, and the artificial grass is fixed on the base through knitting of a loop structure and weaving of a W-shaped consolidation structure. Lawn base fabric; the lawn base fabric has a grid structure; artificial grass is made of graphene-modified Bi2WO6 glass-ceramic powder and polyethylene polypropylene mixed and grafted with maleic anhydride through spinning method.

CN 109 852 080 A provides an anti-rutting asphalt modifier and a preparation method and application thereof. The anti-rutting asphalt modifier is prepared from the following components in parts by weight: 50-90 parts of POK resin, 10-50 parts of corundum, 0-50 parts of a compatibilizer, 0-25 parts of an organic filler, 0.5-2 parts of a coupling agent, and 0.1-1 part of an antioxidant. The preparation method is as follows: mixing the coupling agent with corundum and the organic filler to obtain a material 1; mixing POK, maleic anhydride grafted polypropylene/polyethylene and the antioxidant to obtain a material 2; and performing extrusion granulation on the material 1, and the material 2, and performing drying to obtain the anti-rutting asphalt modifier. The invention also provides an anti-rutting asphalt mixed material which is prepared by using the above-mentioned anti-rutting asphalt modifier. The anti-rutting modifier can significantly improve the modulus of the asphalt mixed material ,and the dynamic modulus of the asphalt mixed material can be significantly increased when the asphalt mixed material is used in a bearing layer of a road, thereby the anti-rutting ability of the road is improved, and the asphalt pavement is prevented from permanent deformation.

CN 109 122 448 A discloses a net cage for improving a water body, belongs to the technical field of fishery, and particularly relates to a net cage for improving a water body or a breeding net cage. When the water body-improving net cage which includes graphene-modified Bi2WO6 glass ceramics is placed in water bodies of rivers or lakes, the net has an aeration effect due to sunlight irradiation, so that the black and dirty water bodies of the rivers or lakes are improved, and decomposition of microorganisms is promoted.

Polymer compositions comprising blends of polypropylene and other materials such as polymers or materials having a polar functional group or other materials such as carbon-containing material, glass fibre and/or carbon fibres, are therefore used in several different applications fields, like films for packaging, injection and blow moulded articles, extruded sheets, agricultural films, industrial liners, profiles, pipes, etc.

Unfortunately, most of the materials and PPs are highly immiscible resulting in blends with poor adhesion among its phases, coarse morphology and consequently poor mechanical properties.

The compatibility between the phases of such blends can be improved by the addition of compatibilizers, which results in a finer and more stable morphology, better adhesion between the phases of the blends and consequently better properties of the final product.

It is known that to the compatibilizer, the mechanical properties are significantly improved by comparison to the blend produced without compatibilization. The advantages frequently reported are a significant increase in the mechanical properties such as the strain at break measured during a test of traction or impact properties. The more significant the improvement of impact properties or the elongation of break, the more interesting is the compatibilizer. Therefore, there is a constant need for processes and compatibilizer that allows for improving the balance of properties and in particular, that allows an improvement of the impact properties.

### Summary

It has now been found that one or more of the above-mentioned needs can be fulfilled by blending polypropylene with one or more other materials and a specific compatibilizer.

According to a first aspect the disclosure provides for a process to produce a polymer composition comprising
- providing from 10 to 80 wt.% of a component A based on the total weight of the polymer composition; wherein the component A is one or more polypropylene resins;
   - providing from 80 to 10 wt.% of a component B based on the total weight of the polymer composition; wherein the component B is one or more materials selected from materials having a polar functional group, polymers having a polar functional group, natural fibres, and any mixture thereof; wherein the one or more polymers having a polar functional group selected from polyamide, ethylene vinyl alcohol, polyester, and any mixture thereof;
- providing from 0.5 to 20 wt.% of a compatibilizer based on the total weight of the polymer composition; wherein the compatibilizer is a grafted blend of polyethylene and polypropylene, and
- melt blending the component A, the component B and the compatibilizer to obtain a polymer composition;

remarkable in that the compatibilizer is grafted blend of polyethylene and polypropylene comprising from 5 to 90 wt.% of polyethylene based on the total weight of the compatibilizer, and has:
   - a melt index MI₂ ranging from 5.0 to 200 g/10 min as determined according to ISO 1133-2011 at 190 °C under a load of 2.16 kg;
   - a complex viscosity at 0.1 rad/sec at 190 °C of at most 1,000 Pa·s; and
a grafting agent content ranging from 0.3 to 5.0 wt.% based on the total weight of the compatibilizer;
and in that the step of providing a compatibilizer being a grafted blend of polyethylene and polypropylene further comprises the sub-step of grafting of a blend of polyethylene and polypropylene to produce said compatibilizer, wherein said sub-step comprises
   a) providing an extruder with one or more thermal regulation devices;
   b) providing a blend of polyethylene and polypropylene;
   c) providing a grafting agent in a content ranging from 0.8 to 10.0 wt.% based on the total weight of the blend of polyethylene and polypropylene provided in step (b), wherein the grafting agent comprises at least one double bound per molecule;
   d) extruding the blend of polyethylene and polypropylene and the grafting agent to obtain a grafted blend of polyethylene and polypropylene; wherein step (d) of extruding comprises a thermal treatment of the blend of polyethylene and polypropylene at a maximum barrel temperature Ts of at least 315 °C in one or more hot zones of the extruder; and

   - e) recovering a grafted blend of polyethylene and polypropylene being the compatibilizer wherein the content of polyethylene in the blend provided in step b) is selected to have a compatibilizer comprising from 5 to 90 wt.% of polyethylene based on the total weight of the compatibilizer.

Surprisingly, it was found that the use of said compatibilizer in blends comprising polypropylene with one or more polymers having a polar functional group allows for improving the balance of mechanical properties and in particular allows for improving the tensile strength properties of the blend as demonstrated by the examples.

### The polymer composition and the process to produce the polymer composition

The component A (i.e., the one or more polypropylene resins) is provided at a content ranging from 10 to 80 wt.% based on the total weight of the polymer composition; preferably, ranging from 20 to 80 wt.%; more preferably ranging from 30 to 70 wt.%; even more preferably ranging from 40 to 60 wt.%, and most preferably ranging from 45 to 55 wt.%.

The component B is provided at a content ranging from 80 to 10 wt.% based on the total weight of the polymer composition; preferably, ranging from 80 to 20 wt.%; more preferably ranging from 70 to 30 wt.%; even more preferably ranging from 60 to 40 wt.%; and most preferably ranging from 55 to 45 wt.%.

The compatibilizer is provided at a content ranging from 0.5 to 20 wt.% based on the total weight of the polymer composition; preferably, ranging from 0.6 to 15 wt.%; more preferably ranging from 0.7 to 10 wt.%; even more preferably ranging from 0.8 to 5 wt.%, and most preferably ranging from 0.9 to 3 wt.%.

For example, the process to produce a polymer composition comprises:
- providing from 40 to 60 wt.% of the component A based on the total weight of the polymer composition;
- providing from 60 to 40 wt.% of the component B based on the total weight of the polymer composition; and
- providing from 0.8 to 5 wt.% of the compatibilizer based on the total weight of the polymer composition.

### The component A being one or more polypropylene resins

In an embodiment, the one or more polypropylene resins are selected from isotactic polypropylene resin and a syndiotactic polypropylene resin; for example, the one or more polypropylene resins are isotactic polypropylene resins.

In an embodiment, the one or more polypropylene resins are selected from a virgin polypropylene resin, a polypropylene post-consumer resin and a blend of a virgin polypropylene resin and a polypropylene post-consumer resin.

In an embodiment, the one or more polypropylene resins have a melt index MI2 ranging from 0.5 to 260.0 g/10 min as determined according to ISO 1133-2011 at 230°C under a load of 2.16 kg; for example, from 0.8 to 200.0 g/10 min; for example, from 1.0 to 180.0 g/10 min; for example, from 1.5 to 160.0 g/10 min; for example, from 2.0 to 80.0 g/10 min; for example, from 4.0 to 80.0 g/10 min.

In an embodiment, the one or more polypropylene resins are selected from a propylene homopolymer, a copolymer of propylene with one or more comonomers selected from ethylene and C₄-C₂₀ alpha-olefins, an heterophasic polypropylene and any mixture thereof.

In an embodiment, the one or more polypropylene resins are or comprise a post-consumer polypropylene resin; wherein the post-consumer polypropylene resin is a blend of recycled polypropylene and at least one recycled polymer different from polypropylene, with the content of the recycled polypropylene ranging from 75 to 97 wt.% relative to the total weight of the post-consumer polypropylene resin.

In an embodiment, the one or more polypropylene resins comprise a post-consumer polypropylene resin at a content ranging from 5 to 100 wt.% of polypropylene post-consumer resin based on the total weight of component A; for example, from 20 to 95 wt.%; for example, from 40 to 90 wt.%; for example, from 50 to 85 wt.%; for example, from 60 to 80 wt.%.

For example, the one or more polypropylene resins are heterophasic polypropylene comprising:
i. from 60 to 95 wt.% based on the total weight of the heterophasic polypropylene of a polypropylene-based matrix selected from a homopolymer and/or a copolymer of propylene with one or more comonomers selected from ethylene and C₄-C₂₀ alpha-olefins, and
ii. from 40 to 5 wt.% based on the total weight of the heterophasic polypropylene of a dispersed ethylene-alpha-olefin copolymer;
for example, the alpha-olefin in the ethylene-alpha-olefin copolymer is selected from the group of alpha-olefins having from 3 to 8 carbon atoms and/or the alpha-olefin in the ethylene-alpha-olefin copolymer is in the range of 25 to 70 wt.% based on the total weight of the ethylene-alpha-olefin copolymer.

### The component B

The component B is one or more materials selected from materials having a polar functional group, polymers having a polar functional group, natural fibres, and any mixture thereof.

In an embodiment, the polar functional group is at least one selected from the group consisting of a carboxyl group, a hydroxyl group, an epoxy group, an amino group, an amide group, a silyl group, an acetylacetonato group, and a mercapto group; with preference, selected from the group consisting of a carboxyl group, a hydroxyl group, an amino group, and an amide group.

In a preferred embodiment, the one or more polymers having a polar functional group are selected from polyamide, ethylene vinyl alcohol, polyester, cellulose derivative with a hydroxyl group, and any mixture thereof; preferably, selected from polyamide and/or ethylene vinyl alcohol.

For example, the one or more polymers having a polar functional group are or comprise one or more polyamides are selected from PA-6; PA-6,6; PA-6,9; PA-6,10; PA-6,12; PA-11; PA-4,6 and PA-66/6 copolymer; with preference, the one or more polyamides are or comprise PA-6.

In an embodiment, the component B is selected from wood fibres, bamboo fibres, flax fibres, hemp fibres, carbon fibres, metal fibres, and any mixture thereof; more preferably, the component B is or comprises wood fibres.

### The compatibilizer and the step of providing a compatibilizer

According to the disclosure, the compatibilizer is a grafted blend of polyethylene and polypropylene comprising from 5 to 90 wt.% of polyethylene based on the total weight of the compatibilizer and has:
- a melt index MI₂ ranging from 5.0 to 200.0 g/10 min as determined according to ISO 1133-2011 at 190 °C under a load of 2.16 kg ;
- a complex viscosity at 0.1 rad/sec at 190 °C of at most 1,000 Pa·s ; and
- a grafting agent content ranging from 0.3 to 5.0 wt.% based on the total weight of the compatibilizer.

The content of polyethylene in the compatibilizer can be determined by ¹³C-NMR.

With preference, the grafting agent is present in the compatibilizer at a content ranging from 0.3 to 5.0 wt.% based on the total weight of the compatibilizer; preferably from 0.3 to 4.0 wt.%; more preferably from 0.4 to 3.5 wt.%; even more preferably from 0.4 to 3.2 wt.% or from 0.4 to 3.0 wt.%, most preferably, from 0.5 to 2.8 wt.% or from 0.5 to 2.5 wt.%; and even most preferably from 0.6 to 2.2 wt.%. It is understood that the grafting agent content represents the grafted content as determined by titration and does not include the unreacted grafting agent. In other words, the grafting agent content determination is performed after purification as described in the methods.

For example, the compatibilizer has a melt index MI₂ ranging from 5.0 to 200.0 g/10 min or as determined according to ISO 1133-2011 at 190 °C under a load of 2.16 kg; preferably ranging from 10.0 to 180.0 g/10 min; even more preferably from 20.0 to 160.0 g/10 min or from 25.0 to 150.0 g/10 min, most preferably from 30.0 to 140.0 g/10 min; and even most preferably from 35.0 to 130.0 g/10 min, or from 38.0 to 120.0 g/10 min or from 40.0 to 110.0 g/10 min.

For example, the compatibilizer has a complex viscosity at 0.1 rad/sec at 190 °C of at most 1,000 Pa·s; preferably of at most 800 Pa·s; more preferably of at most 600 Pa·s; and most preferably of at most 400 Pa.s.

For example, the compatibilizer has a complex viscosity at 0.1 rad/sec at 190 °C of at least 50 Pa·s; preferably of at least 80 Pa·s; more preferably of at least 100 Pa·s; and most preferably of at least 120 Pa.s or at least 150 Pa.s.

For example, the compatibilizer further has a complex viscosity ratio of at most 20 wherein the complex viscosity ratio is the ratio of the complex viscosity at a frequency of 0.1 rad/sec to the complex viscosity at a frequency of 100 rad/sec when measured at 190 °C; preferably of at most 18; more preferably of at most 15; even more preferably of at most 12; most preferably of at most 10 and even most preferably of at most 8.0.

With preference, the compatibilizer further has an Mz/Mw of at most 7.0 as determined by size exclusion chromatography; preferably at most 6.0; preferably at most 5.0.

For example, the compatibilizer further has an Mw/Mn ranging from 2.0 to 4.5 as determined by size exclusion chromatography; preferably from 2.1 to 4.4; more preferably from 2.2 to 4.0; and even more preferably from 2.3 to 3.5. The Mw/Mn is determined under conditions suitable for polypropylene.

For example, the compatibilizer further has a tan delta (G"/G') at 0.1 rad at 190 °C above 2.5; preferably of at least 3.0; more preferably of at least 5.0 and even more preferably of at least 10.0.

In an embodiment, the step of providing a compatibilizer being a grafted blend of polyethylene and polypropylene further comprises the sub-step of grafting a blend of polyethylene and polypropylene to produce said compatibilizer.

The sub-step of grafting of a blend of polyethylene and polypropylene to produce the compatibilizer according to the disclosure comprises:
a) providing an extruder with one or more thermal regulation devices;
b) providing blend of polyethylene and polypropylene;
c) providing a grafting agent in a content ranging from 0.8 to 10.0 wt.% based on the total weight of the blend of polyethylene and polypropylene provided in step (b), wherein the grafting agent comprises at least one double bound per molecule;
d) extruding the blend of polyethylene and polypropylene and the grafting agent to obtain a grafted polyethylene-polypropylene blend; wherein step (d) of extruding comprises a thermal treatment of the blend of polyethylene and polypropylene at a maximum barrel temperature Ts of at least 315 °C in one or more hot zones of the extruder; and
e) recovering a grafted polyethylene-polypropylene blend being the compatibilizer wherein the content of polyethylene in the blend provided in step b) is selected to have a compatibilizer comprising from 5 to 90 wt.% of polyethylene based on the total weight of the compatibilizer.

With preference, blend of polyethylene and polypropylene provided in step (b) is a dry blend. The maximum barrel temperature Ts in the one or more hot zones of the extruder can be obtained in any way. For example, the maximum barrel temperature Ts of at least 315 °C in step (d) is obtained:
- by self-heating of the material wherein the extruder is a twin screw extruder and the one or more hot zones have a total length equal to or greater than 6 D with D being the screw diameter, wherein the screw profile comprises at least one hot zone with successive kneading blocks elements over a length of at least 4 D followed by a left-handed element with D being the screw diameter, wherein the thermal regulation devices, are set to initial imposed barrel temperatures ranging between 240 and 320 °C and are switched off when the barrel temperature in the zone spontaneously exceeds the imposed barrel temperature by at least 3 °C without the need of external heat application; with preference, the extrusion is performed with mechanical specific energy greater than or equal to 0.30 kWh/kg, preferably greater or equal than 0.35 kWh/kg,
   or
- by heating the material in an extruder selected from a single screw extruder or a twin-screw extruder, using the thermal regulation devices of the extruder to have a maximum barrel temperature Ts ranging from 315 to 430 °C in at least one hot zone of the extruder.

In an embodiment, the thermal treatment is performed by self-heating the material in a twin-screw extruder, and the screw profile comprises two or more hot zones wherein a first hot zone comprises successive kneading blocks elements over a length of at least 4 D followed by a left-handed element with D being the screw diameter, and one or more additional hot zones placed downstream the first hot zone are filled mixing zones, each comprising kneading blocks elements over a length of at least 4 D followed by a kneading left-handed element or by a left-handed element with D being the screw diameter.

In an embodiment, the thermal treatment is performed by self-heating the material in a twin-screw extruder and the successive kneading blocks elements of at least one hot zone of the extruder comprise disks with disks offset by 90 degrees and a disk width of at least 0.3 D wherein D is the screw diameter.

In an embodiment, one hot zone of the extruder is or comprises the melting zone of the extruder.

In a preferred embodiment, step (d) of extruding the blend of polyethylene and polypropylene comprises a thermal treatment by self-heating of the material wherein the extrusion is performed in a twin-screw extruder and with mechanical specific energy greater than or equal to 0.30 kWh/kg, preferably greater than or equal to 0.35 kWh/kg; more preferably greater than or equal to 0.40 kWh/kg, even more preferably greater than or equal to 0.45 kWh/kg; most preferably greater than or equal to 0.50 kWh/kg and even most preferably greater than or equal to 0.60 kWh/kg.

For example, step (d) of extruding the blend of polyethylene and polypropylene comprises a thermal treatment self-heating of the material or by heating of the material wherein the extrusion is performed at a maximum barrel temperature Ts ranging from 315 to 430 °C in at least one hot zone; preferably at a maximum barrel temperature ranging from 330 to 420 °C; more preferably at a maximum barrel temperature ranging from 340 to 410 °C; even more preferably at a maximum barrel temperature ranging from 360 to 400 °C and most preferably at a maximum barrel temperature ranging from 340 to 395 °C.

For example, step (d) of extruding the blend of polyethylene and polypropylene comprises a thermal treatment at a maximum barrel temperature of at least 315 °C in at least one hot zone; preferably at a temperature of at least 320 °C; more preferably at a temperature of at least 330 °C; even more preferably at a temperature of at least 340 °C and most preferably at a temperature of at least 350 °C, or at a temperature of at least 360 °C.

For example, step (d) of extruding the blend of polyethylene and polypropylene comprises performing the extrusion with a residence time of less than 10 minutes such as ranging from 10 seconds to 10 minutes; preferably with a residence time ranging from 20 seconds to 5 minutes; more preferably with a residence time ranging from 10 to 180 seconds; even more preferably, from 10 to 120 seconds; most preferably, from 20 to 100 seconds; and even most preferably, from 30 to 80 seconds.

In an embodiment, the polyethylene in the blend of polyethylene and polypropylene is selected to have:
- a high load melt index (HLMI R) of at least 1.0 g/10 min as determined according to ISO 1133-2011 at 190 °C under a load of 21.6 kg; and/or
- a melt index (MI₂ R) of at most 3.0 g/10 min as determined according to ISO 1133-2011 at 190 °C under a load of 2.16 kg; and/or
- a density of at least 0.910 g/cm³ as determined according to ISO 1183-1:2012 at 23 °C.

For example, the polyethylene in the blend of polyethylene and polypropylene is selected to have:
- a high load melt index (HLMI R) of at least 1.0 g/10 min as determined according to ISO 1133-2011 at 190 °C under a load of 21.6 kg, a melt index (MI₂ R) of at most 0.45 g/10 min as determined according to ISO 1133-2011 at 190 °C under a load of 2.16 kg and a density of at least 0.940 g/cm³ as determined according to ISO 1183-1:2012 at 23 °C; or
- a melt index (MI₂ R) ranging from 0.8 to 1.5 g/10 min as determined according to ISO 1133-2011 at 190 °C under a load of 2.16 kg and a density ranging from 0.910 g/cm³ to 0.930 g/cm3 as determined according to ISO 1183-1:2012 at 23 °C.

In an embodiment, the polyethylene blend of polyethylene and polypropylene further has:
- an Mz/Mw of at least 4.0 as determined by size exclusion chromatography (SEC); and/or
- a complex viscosity at 0.1 rad/sec at 190 °C of ranging from 20,000 to 80,000 Pa·s; and/or
- an Mw/Mn ranging from 5.0 to 30.0 as determined by size exclusion chromatography; and/or
- a complex viscosity ratio above 10 wherein the complex viscosity ratio is the ratio of the complex viscosity at a frequency of 0.1 rad/sec to the complex viscosity at a frequency of 100 rad/sec when measured at 190 °C; and/or
- a tan delta (G"/G' measured at 0.1 rad/s at 190 °C) ranging from 0.5 to 3.0; preferably, from 0.8 to 2.6.

For example, the polyethylene in blend of polyethylene and polypropylene is a recycled polyethylene material.

The blend of polyethylene and polypropylene comprises from 5 to 90 wt.% or from 10 to 90 wt.% of polyethylene based on the total weight of the blend; from 12 to 75 wt.%; more preferably, from 15 to 70 wt.% or from 18 to 60 wt.%; even more preferably ranging from 20 to 50 wt.%; and most preferably ranging from 20 to 45 wt.% or from 5 to 40 wt.%. The content of polyethylene in the blend can be determined by ¹³C-NMR.

In an embodiment, the grafting agent comprises or consists of one or more functional monomers selected from maleic anhydride (MAH), glycidyl methacrylate (GMA), methyl methacrylate (MMA), acrylic acid (AAc), butyl acrylate (BA) vinyl acetate (VA), diethyl maleate (DEM), acrylamide (AAm), acrylonitrile (CAN), and any mixture thereof. With preference, the grafting agent is or comprises maleic anhydride (MAH).

For example, the grafting agent is provided in a content ranging from 0.1 to 10.0 wt.% or from 0.8 to 8.0 wt.% or from 1.0 to 6.0 wt.% or from 1.5 to 4.0 wt.% or from 2.0 to 5.0 wt.% based on the total weight of the blend of polyethylene and polypropylene provided on step (b).

The grating agent is present in the compatibilizer at a content ranging from 0.3 to 5.0 wt.% based on the total weight of the compatibilizer. Should the desired grafting level be not obtained the first time, the person skilled in the art may increase the maximum barrel temperature Ts in the one or more hot zones, the introduced grafting agent content, the residence time or the screw speed. For example, the person skilled in the art may adapt the design of the screw profile, as shown in the examples.

According to a second aspect, the present disclosure provides for a polymer composition produced by the process according to the first aspect.

According to a third aspect, the present disclosure provides for a compatibilizer being a grafted blend of polyethylene and polypropylene remarkable in that it comprises at least 20 wt.% of polyethylene based on the total weight of the compatibilizer, and has:
- a melt index MI₂ ranging from 5.0 to 200.0 g/10 min as determined according to ISO 1133-2011 at 190 °C under a load of 2.16 kg;
- a complex viscosity at 0.1 rad/sec at 190 °C of at most 1,000 Pa·s; and

a grafting agent content ranging from 0.3 to 5.0 wt.% based on the total weight of the compatibilizer;
wherein the compatibilizer is produced by the method comprising:
   a) providing an extruder with one or more thermal regulation devices;
   b) providing a blend of polyethylene and polypropylene;
   c) providing a grafting agent in a content ranging from 0.8 to 10.0 wt.% based on the total weight of the blend of polyethylene and polypropylene provided in step (b), wherein the grafting agent comprises at least one double bound per molecule;
   d) extruding the blend of polyethylene and polypropylene and the grafting agent to obtain a grafted blend of polyethylene and polypropylene; wherein step (d) of extruding comprises a thermal treatment of the blend of polyethylene and polypropylene at a maximum barrel temperature Ts of at least 315 °C in one or more hot zones of the extruder; and
   e) recovering a grafted blend of polyethylene and polypropylene being the compatibilizer wherein the content of polyethylene in the blend provided in step b) is selected to have a compatibilizer comprising from 5 to 90 wt.% of polyethylene based on the total weight of the compatibilizer;
with preference, the melt index MI₂ ranging from 20.0 to 160.0 g/10 min as determined according to ISO 1133-2011 at 190 °C under a load of 2.16 kg and/or the grafting agent content ranging from 0.5 to 2.5 wt.% based on the total weight of the compatibilizer

With preference, the grafting agent is or comprises maleic anhydride (MAH).

In an embodiment, the compatibilizer being a grafted blend of polyethylene and polypropylene Mw/Mn ranging from 2.0 to 4.5 as determined by size exclusion chromatography wherein the Mn and Mw are determined using the conditions suitable for polypropylene.

According to a fourth aspect, the present disclosure provides for the use of a compatibilizer according to the third aspect in a process to produce a polymer composition being the blend of a component A being one or more polyethylene resins and one or more polymers having a polar functional group.

According to a fifth aspect, the present disclosure provides for a polymer composition remarkable in that it comprises the compatibilizer according to the second aspect and a component A being one or more polypropylene and a component B being one or more materials selected from materials having a polar functional group, polymers having a polar functional group, natural fibres, and any mixture thereof.

In a preferred embodiment, the polymer composition is a composite material and the component B is selected from wood fibres, bamboo fibres, flax fibres, hemp fibres, and any mixture thereof; more preferably, the composite material is a wood-plastic composite.

### Description of the figures

- Figure 1 is an example of a screw profile that can be used in the context of the disclosure.
- Figure 2 is another example of a screw profile that can be used in the context of the disclosure.
- Figure 3 is the grafted MA content in the compatibilizer as a function of the content of polypropylene in the polyethylene-polypropylene blend for experiments realized at N = 400 rpm and Ts = 390°C.
- Figure 4 provides results for the Young Modulus (MPa) for the inventive and comparative compositions
- Figure 5 provides results for the Strain at Break (%) for the inventive and comparative compositions
- Figure 6 provides results for the Stress at Break (MPa) for the inventive and comparative compositions
- Figure 7 provides results for the Impact Strength (kJ/m²) for the inventive and comparative compositions
- Figure 8 is Van Gurp Palmen plot for blends PP-PE 80-20 ad PP-PE-MA 80-20-3
- Figure 9 is Van Gurp Palmen plot for blends PP-PE 20-80 ad PP-PE-MA 20-80-3

### Detailed description

It is to be understood that this disclosure is not limited to particular processes or compositions described, as such processes or compositions may, of course, vary. It is also to be understood that the terminology used herein is not intended to be limiting since the scope of the present disclosure will be limited only by the appended claims.

When describing the polymers, uses and processes of the disclosure, the terms employed are to be construed by the following definitions, unless a context dictates otherwise. For the disclosure, the following definitions are given:
As used herein, the singular forms "a", "an", and "the" include both singular and plural referents unless the context dictates otherwise. By way of example, "a composition" means one composition or more than one composition.

The terms "comprising", "comprises" and "comprised of as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g., 1 to 5 can include 1, 2, 3, 4, 5 when referring to, for example, a number of elements, and can also include 1.5, 2, 2.75 and 3.80, when referring to, for example, measurements). The recitation of endpoints also includes the endpoint values themselves (e.g., from 1.0 to 5.0 includes both 1.0 and 5.0). Any numerical range recited herein is intended to include all sub-ranges subsumed therein.

All references cited in the present specification are hereby incorporated by reference in their entirety. In particular, the teachings of all references herein specifically referred to are incorporated by reference. Indication of a standard method to determine a parameter implies referring to the standard in force at the priority date of the application, in case the year of the standard is not indicated.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the disclosure and form different embodiments, as would be understood by those in the art. For example, in the following claims and statements, any of the embodiments can be used in any combination.

Unless otherwise defined, all terms used in disclosing the disclosure, including technical and scientific terms, have the meaning as commonly understood by one of ordinary skill in the art to which this disclosure belongs. By means of further guidance, definitions for the terms used in the description are included to better appreciate the teaching of the present disclosure.

The terms "polyethylene" (PE) and "ethylene polymer" may be used synonymously. The term "polyethylene" encompasses ethylene homopolymer as well as ethylene copolymer resin which can be derived from ethylene and one or more comonomers selected from the group consisting of C₃-C₂₀ alpha-olefins, such as propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.

The terms "polyethylene resin" or "ethylene homopolymer resin" or "ethylene copolymer resin" refer to polyethylene fluff or powder that is extruded, and/or melted and/or pelletized and can be produced through compounding and homogenizing of the polyethylene resin as taught herein, for instance, with mixing and/or extruder equipment. As used herein, the term "polyethylene" may be used as a shorthand for "polyethylene resin". The terms "fluff" or "powder" refer to polyethylene material with the hard catalyst particle at the core of each grain and is defined as the polymer material after it exits the polymerization reactor (or the final polymerization reactor in the case of multiple reactors connected in series).

The terms "Post-Consumer Resin", which may be abbreviated as "PCR", is used to denote the components of domestic waste, household waste or end of life vehicle waste. In other words, the PCRs are made of recycled products from waste created by consumers. The terms "Post-Industrial Resin" which may be abbreviated as "PIR", is used to denote the waste components from pre-consumer resins during packaging processes. In other words, the PIRs are made of recycled products created from scrap by manufacturers.

The term "recycled polyethylene" contrasts with the term "virgin polyethylene", the term "virgin" is used to denote a polyethylene composition or material directly obtained from a polyethylene polymerization plant. The terms "directly obtained" is meant to include that the polyethylene resin may optionally be passed through a pelletization step or an additivation step or both.

The present disclosure provides for a process to produce a polymer composition obtained by such a process comprising one or more polypropylene resins (i.e., a component A) and one or more materials selected from materials having a polar functional group, polymers having a polar functional group, natural fibres, and any mixture thereof (i.e., a component B).

According to the disclosure, the process to produce a polymer composition is comprising the steps of:
- providing from 10 to 90 wt.% of a component A based on the total weight of the polymer composition; wherein the component A is one or more polypropylene resins;
- providing from 90 to 10 wt.% of a component B based on the total weight of the polymer composition; wherein the component B is one or more materials selected from materials having a polar functional group, polymers having a polar functional group, natural fibres, and any mixture thereof;
- providing from 0.5 to 20 wt.% of a compatibilizer based on the total weight of the polymer composition; wherein the compatibilizer is a grafted blend of polyethylene and polypropylene, and
- melt blending the component A, the component B and the compatibilizer to obtain a polymer composition;
and is remarkable in that the compatibilizer is blend of polyethylene and polypropylene comprising from 5 to 90 wt.% of polyethylene based on the total weight of the compatibilizer, and has:
- a melt index MI₂ ranging from 5.0 to 200.0 g/10 min as determined according to ISO 1133-2011 at 230 °C under a load of 2.16 kg;
- a complex viscosity at 0.1 rad/sec at 190 °C of at most 1,000 Pa·s; and
- a grafting agent content ranging from 0.3 to 5.0 wt.% based on the total weight of the compatibilizer.

In an embodiment, the step of providing a compatibilizer being a grafted polyethylene-polypropylene blend further comprises the sub-step of grafting a blend of polyethylene and polypropylene to produce said compatibilizer.

The component A being one or more polypropylene resins is provided at a content ranging from 10 to 90 wt.% based on the total weight of the polymer composition; preferably, ranging from 20 to 80 wt.%; more preferably ranging from 30 to 70 wt.%; even more preferably ranging from 40 to 60 wt.%, and most preferably ranging from 45 to 55 wt.%.

The component B is provided at a content ranging from 90 to 10 wt.% based on the total weight of the polymer composition; preferably, ranging from 80 to 20 wt.%; more preferably ranging from 70 to 30 wt.%; even more preferably ranging from 60 to 40 wt.%; and most preferably ranging from 55 to 45 wt.%.

The compatibilizer is provided at a content ranging from 0.5 to 20 wt.% based on the total weight of the polymer composition; preferably, ranging from 0.6 to 15 wt.%; more preferably ranging from 0.7 to 10 wt.%; even more preferably ranging from 0.8 to 5 wt.%, and most preferably ranging from 0.9 to 3 wt.%.

For example, the process to produce a polymer composition comprises:
- providing from 40 to 60 wt.% of a component A based on the total weight of the polymer composition;
- providing from 60 to 40 wt.% of a component B based on the total weight of the polymer composition; and
- providing from 0.8 to 5 wt.% of the compatibilizer based on the total weight of the polymer composition.

### The component A being one or more polypropylene

For example, the one or more polypropylene resins are selected from isotactic polypropylene resin and syndiotactic polypropylene resin; for example, at least one polypropylene resin is isotactic.

When the one or more polypropylene resins are isotactic, they are characterized by an isotacticity for which the content of mmmm pentads is measured. Preferably, the content of mmmm pentads polypropylene has a content of mmmm pentads of at least 90 % as determined by ¹³C-NMR analysis, preferably at least 95 %, more preferably at least 98 % and even more preferably of at least 99 %.

The isotacticity may be determined by ¹³C-NMR analysis as described in the test methods. Bovey's NMR nomenclature for an isotactic pentad is ...mmmm... with each "m" representing a "meso" dyad or successive methyl groups on the same side in the plane. As known in the art, any deviation or inversion in the structure of the chain lowers the degree of isotacticity and crystallinity of the polymer.

For example, the one or more polypropylene resins are selected from a virgin polypropylene resin, a polypropylene post-consumer resin and a blend of a virgin polypropylene resin and a polypropylene post-consumer resin.

For example, at least one polypropylene resin is selected from a propylene homopolymer, a copolymer of propylene with one or more comonomers selected from ethylene and C₄-C₂₀ alpha-olefins, a heterophasic polypropylene and any mixture thereof. In a preferred embodiment, at least one polypropylene resin is selected from a copolymer of propylene with one or more comonomers selected from ethylene and C₄-C₂₀ alpha-olefins, a heterophasic polypropylene and any mixture thereof.

In an example, at least one polypropylene resin is or comprises a homopolymer of propylene. A propylene homopolymer according to this disclosure has less than 0.2 wt.%, preferably, less than 0.1 wt.%, more preferably, less than 0.05 wt.% and most preferably, less than 0.005 wt.%, of alpha-olefins other than propylene in the polymer. Even most preferably, no other alpha-olefins are detectable. Accordingly, when a polypropylene resin is a homopolymer of propylene, the comonomer content in the polypropylene is less than 0.2 wt.%, more preferably, less than 0.1 wt.%, even more preferably, less than 0.05 wt.% and most preferably, less than 0.005 wt.% based on the total weight of the polypropylene.

In an example, at least one polypropylene resin is or comprises a copolymer of propylene and one or more comonomers. Suitable comonomers can be selected from the group consisting of ethylene and aliphatic C₄-C₂₀ alpha-olefins. Examples of suitable aliphatic C₄-C₂₀ alpha-olefins include 1-butene, 1-pentene, 4-methyl-1-pentene, 1-hexene, 1-octene, 1-decene, 1-dodecene, 1-tetradecene, 1-hexadecene, 1-octadecene and 1-eicosene. Preferably, the comonomer is ethylene or 1-hexene. More preferably, the comonomer is ethylene.

In an example, the one or more polypropylene resins are or comprise at least one propylene copolymer. The one or more polypropylene resins can be propylene random copolymers, propylene heterophasic copolymers or a mixture thereof.

The at least one random propylene copolymer comprises at least 0.1 wt.% of one or more comonomers, preferably at least 1 wt.%. The at least one random propylene copolymer comprises up to 10 wt.% of one or more comonomers and most preferably up to 6 wt.%. Preferably, the at least one random copolymer is at least one copolymer of propylene and ethylene.

The at least one heterophasic propylene copolymer comprises a matrix propylene polymer phase and a dispersed phase of a rubber. With preference, the rubber is ethylene-propylene rubber (EPR).

The heterophasic propylene copolymers of the present disclosure as defined above can be produced by sequential polymerization in a series of polymerization reactors in presence of a catalyst system, wherein in a first polymerization stage the propylene polymer is produced, and in a second polymerization stage the rubber is produced by copolymerizing ethylene and at least one further olefin different from ethylene. The catalyst system is added to the first polymerization stage.

Thus, with preference, the one or more polypropylene resins are or comprise one or more heterophasic polypropylene resins comprising:
i. from 60 to 95 wt.% based on the total weight of the heterophasic polypropylene resin of a polypropylene-based matrix selected from a homopolymer and/or a copolymer of propylene with one or more comonomers selected from ethylene and C₄-C₂₀ alpha-olefins, and
ii. from 40 to 50 wt.% based on the total weight of the heterophasic polypropylene resin of a dispersed ethylene-alpha-olefin copolymer;
more preferably, the alpha-olefin in the ethylene-alpha-olefin copolymer is selected from the group of alpha-olefins having from 3 to 8 carbon atoms and/or the alpha-olefin in the ethylene-alpha-olefin copolymer is in the range of 25 to 70 wt.% based on the total weight of the ethylene-alpha-olefin copolymer.

For example, the one or more polypropylene resins have a melt index MI2 ranging from 0.5 to 260.0 g/10 min as determined according to ISO 1133-2011 at 230°C under a load of 2.16 kg; for example, from 0.8 to 200.0 g/10 min; for example, from 1.0 to 180.0 g/10 min; for example, from 1.5 to 160.0 g/10 min; for example, from 2.0 to 80.0 g/10 min; for example, from 4.0 to 80.0 g/10 min. The value of MI2 of the one or more polypropylene resins used as component A is obtained without a degradation treatment.

For example, the one or more polypropylene resins have a melt index MI₂ of at least 4.0 g/10 min, preferably of at least 5.0 g/10 min, more preferably of at least 6.0 g/10 min, even more preferably of at least 7.0 g/10 min, most preferably of at least 8.0 g/10 min, and even most preferably of at least 10.0 g/10 min as measured according to ISO 1133-2011 at 230°C under a load of 2.16 kg. The value of MI2 of the one or more polypropylene resins is obtained without a degradation treatment.

More preferably, the one or more polypropylene resins have a melt index MI2 of at most 260.0 g/10 min as measured according to ISO 1133-2011 at 230°C under a load of 2.16 kg, preferably of at most 200.0 g/10 min, more preferably of at most 180.0 g/10 min, even more preferably of at most 160.0 g/10 min; most preferably of at most 100.0 g/10 min; even most preferably of at most 80.0 g/ 10 min or of at most 50.0 g/ 10 min. The value of MI2 of the one or more polypropylene resins are obtained without a degradation treatment.

In an embodiment, the one or more polypropylene resins have a melt index MI2 ranging from 0.5 to 80.0 g/10 min as determined according to ISO 1133-2011 at 230°C under a load of 2.16 kg; for example, from 0.8 to 50.0 g/10 min; for example, from 1.0 to 40.0 g/10 min; for example, from 1.2 to 30.0 g/10 min; for example, from 1.5 to 25.0 g/10 min; for example 1.7 to 10.0 g/10 min.

The one or more polypropylene resins have a monomodal molecular weight distribution or a multimodal molecular weight distribution, for example, a bimodal molecular weight distribution.

The one or more polypropylene resins can be produced by polymerizing propylene and one or more optional comonomers, in the presence of a catalyst being a metallocene catalyst or a Ziegler-Natta catalyst.

In a preferred example, the catalyst system may comprise a Ziegler-Natta catalyst. The term "Ziegler-Natta catalyst" refers to catalysts of the general formula MXn, wherein M is a transition metal compound selected from groups IV to VII, wherein X is a halogen, and wherein n is the valence of the metal. Preferably, the metal is titanium, chromium or vanadium. Most preferably, the metal is titanium.

The Ziegler-Natta catalyst system, under the disclosure, comprises a titanium compound having at least one titanium-halogen bond and an internal electron donor, both on a suitable support, an organoaluminium compound, and an optional external electron donor. Suitable support is, for example, a magnesium halide in an active form. A suitable external electron donor (ED) is, for example, phthalate or succinate or a diether compound. The organoaluminium compound used in the process of the present disclosure is triethyl aluminium (TEAL).

Advantageously, the triethyl aluminium has a hydride content, expressed as AlH₃, of less than 1.0 wt.% for the triethyl aluminium. More preferably, the hydride content is less than 0.5 wt.%, and most preferably, the hydride content is less than 0.1 wt.%. It would not depart from the scope of the disclosure if the organoaluminium compound contains minor amounts of other compounds of the trialkyl aluminium family, such as triisobutyl aluminium, tri-n-butyl aluminium, and linear or cyclic alkyl aluminium compounds containing two or more Al atoms, provided they show polymerization behaviour comparable to that of TEAL.

In the process of the present disclosure, the molar ratio Al/Ti is not particularly specified. However, it is preferred that the molar ratio Al/Ti is at most 100.

If an external electron donor is present, it is preferred that the molar ratio AI/ED, with ED denoting external electron donor, is at most 120, more preferably, it is within the range of 5 to 120, and most preferably, within the range of 10 to 80. Before being fed to the polymerization reactor, the catalytic system preferably undergoes a premix and/or a pre-polymerization step. In the premix step, the triethyl aluminium (TEAL) and the external electron donor (ED) - if present -, which have been pre-contacted, are mixed with the Ziegler-Natta catalyst at a temperature within the range of 0°C to 30°C, preferably, within the range of 5°C to 20°C, for up to 15 min. The mixture of TEAL, an external electron donor (if present) and Ziegler-Natta catalyst is pre-polymerized with propylene at a temperature within the range of 10°C to 100°C, preferably, within the range of 10°C to 30°C, for 1 to 30 min, or for 2 to 20 min.

In the first stage, the polymerization of propylene and one or more optional comonomers can, for example, be carried out in liquid propylene as reaction medium (bulk polymerization). It can also be carried out in one or more diluents, such as hydrocarbon that is inert under polymerization conditions (slurry polymerization). It can also be carried out in the gas phase. Those processes are well known to one skilled in the art.

Diluents, which are suitable for being used under the present disclosure, may comprise but are not limited to hydrocarbon diluents such as aliphatic, cycloaliphatic and aromatic hydrocarbon solvents, or halogenated versions of such solvents. Non-limiting illustrative examples of solvents are butane, isobutane, pentane, hexane, heptane, cyclopentane, cyclohexane, cycloheptane, methyl cyclopentane, methyl cyclohexane, isooctane, benzene, toluene, xylene, chloroform, chlorobenzenes, tetrachloroethylene, dichloroethane and trichloroethane.

For the present disclosure, the propylene polymers are preferably produced by polymerization in liquid propylene at temperatures within the range of 20°C to 100°C. Preferably, temperatures are within the range of 60°C to 80°C. The pressure can be atmospheric or higher. Preferably, the pressure is ranging between 2.5 and 5.0 MPa.

Hydrogen is used to control the chain lengths of the propylene polymers. For the production of a propylene polymer with higher MI2, i.e. with lower average molecular weight and shorter polymer chains, the concentration of hydrogen in the polymerization medium needs to be increased. Inversely, the hydrogen concentration in the polymerization medium has to be reduced to produce a propylene polymer with lower MI2, i.e. with higher average molecular weight and longer polymer chains.

In such a sequential arrangement of polymerization reactors, the propylene homopolymer withdrawn from one reactor is transferred to the one following in the series, where the polymerization is continued. To produce propylene homopolymer fractions of different melt indexes, the polymerization conditions in the respective polymerization reactors need to be different; for example, in that the hydrogen concentration in the polymerization reactors differs.

The melt index MI2 of the propylene polymer produced in the second reactor is calculated using the following equation (2): $Log \left({MI 2}_{final}\right) = {w}_{B 1} \times \left(Log {MI 2}_{B 1}\right) + {w}_{B 2} \times Log \left({MI 2}_{B 2}\right)$ (2) wherein MI2_{final} is the melt index MI2 of the total propylene polymer produced, MI2_{B1} and MI2_{B2} are the respective melt index MI2 of the propylene polymers fractions produced in the first and the second polymerization loop reactors, and w_{B1} and w_{B2} are the respective weight fractions of the propylene polymers produced in the first and in the second polymerization loop reactors as expressed in weight per cent (wt.%) of the total propylene polymer produced in the two polymerization loop reactors. These weight fractions are also commonly described as the contribution by the respective loop.

The matrix propylene polymer, preferably, propylene homopolymer, can be made, for example, in loop reactors or in a gas phase reactor. The propylene polymer produced in this way, in a first polymerization stage, is transferred to a second polymerization stage, into one or more secondary reactors where ethylene and at least one further olefin different from ethylene are added to produce the rubber. For example, the further olefin is propylene. Thus, the rubber produced is ethylene-propylene rubber (EPR). Preferably, this polymerization step is done in a gas phase reactor. The propylene copolymer can be prepared using a controlled morphology catalyst that produces rubber spherical domains dispersed in a polypropylene matrix. The amount and properties of the components are controlled by the process conditions.

The average molecular weight of the rubber, for which the intrinsic viscosity is a measure, is controlled by the addition of hydrogen to the polymerization reactors of the second polymerization stage. The amount of hydrogen added is such that the rubber has an intrinsic viscosity of at least 2.0 dl/g, and of at most 5.5 dl/g, measured in tetralin at 135°C following ISO 1628. The contribution of the second polymerization stage, i.e. the rubber content of the heterophasic propylene copolymer is from 5 to 50 wt.% relative to the total weight of the heterophasic propylene copolymer.

After the last polymerization reactor, the polymers are recovered as a powder and can then be pelletized or granulated.

Examples of polypropylene resins suitable to be used as component A are commercially available from TotalEnergies^{®}. A non-limitative example is PPH3060 with a melt index MI2 of 1.8 g/10 min or PPC7760 with a melt index MI2 of 15.0 g/10 min. Another example is PPH 7060 with a melt index MI2 of 12 g/10 min. Another example is PPC 6742 with a melt index MI2 of 8 g/10 min. Another example is MH140CN0, with a melt index MI2 of 140 g/10 min. All MI2 are determined according to ISO 1133-2011 at 230°C under a load of 2.16 kg.

For example, the one or more polypropylene resins are selected from a virgin polypropylene resin, a polypropylene post-consumer resin and a blend of a virgin polypropylene resin and a polypropylene post-consumer resin.

In one or more embodiments, the one or more polypropylene resins comprise a post-consumer polypropylene resin at a content ranging from 5 to 100 wt.% of polypropylene post-consumer resin based on the total weight of component A; for example, from 20 to 95 wt.%; for example, from 40 to 90 wt.%; for example, from 50 to 85 wt.%; for example, from 60 to 80 wt.%.

When the one or more polypropylene resins are or comprise a post-consumer resin; the MI2 of the polypropylene post-consumer resin can be selected in the same manner as for the virgin resin.

For example, the one or more polypropylene resins are or comprise a post-consumer polypropylene resin; wherein the post-consumer polypropylene resin is a blend of recycled polypropylene and at least one recycled polymer different from polypropylene, with the content of the recycled polypropylene ranging from 75.0 to 97.0 wt.% relative to the total weight of the post-consumer resin. The person skilled in the art advantageously selects a post-consumer polypropylene resin that comprises recycled polyethylene, for example, in a content ranging from 3.0 to 25.0 wt.% based on the post-consumer polypropylene resin, to boost the impact properties of the composite material. In a preferred embodiment, the post-consumer polypropylene resin comprises less than 10 wt.% based on the total weight of the recycled resin of polymers other than polypropylene. For example, the post-consumer polypropylene resin may contain up to 10.0 wt.% of polyethylene based on the total weight of the post-consumer polypropylene resin; for example, from 3.0 to 10.0 wt.%. For example, the post-consumer polypropylene resin may contain from 10.0 to 25.0 wt.% of polyethylene based on the total weight of the post-consumer polypropylene resin wherein the content of polyethylene in the post-consumer polypropylene resin is determined by ¹³C-NMR.

An example of a commercially available polypropylene post-consumer resin (PCR-PP), that can be used according to the disclosure, is PP Regranulat 500-S or PP Regranulat 530-S marketed by Vogt Plastic GmbH.

The polypropylene post-consumer resin (PCR-PP) that can be used under the disclosure is preferably originated from a specific collection of domestic or household waste, and/or from the end of life vehicles (ELV) waste.

### The Component B

The component B is one or more materials selected from materials having a polar functional group, polymers having a polar functional group, natural fibres, and any mixture thereof.

For example, the polar functional group is at least one selected from the group consisting of a carboxyl group, a hydroxyl group, an epoxy group, an amino group, an amide group, a silyl group, an acetylacetonato group, and a mercapto group. With preference, the polar functional group is at least one selected from the group consisting of a carboxyl group, a hydroxyl group, an amino group, and an amide group.

For example, the one or more polymers having a polar functional group are selected from polyamide, ethylene vinyl alcohol, polyester, cellulose derivative with a hydroxyl group, and any mixture thereof; preferably, selected from polyamide and/or ethylene vinyl alcohol.

In a preferred embodiment the one or more polymers having a polar functional group are or comprise one or more polyamides.

The polyamide can be selected from aliphatic, semi-aromatic or aromatic polyamides, which can have a crystalline, semi-crystalline or amorphous structure.

The polyamide can further be a virgin polyamide or a recycled material comprising polyamide.

Examples of polyamides include polyhexamethylene-adipamide, polyhexamethylene azelaamide, polyhexamethylene sebacamide, and polyhexamethylene dodecanoamide, and polyamides produced by ring opening of lactams, i.e., polycaprolactam, polylauric lactam, poly-11-aminoundecanoic acid, bisϕparaaminocyclohexyl) methane dodecanoamide.

With preference, the one or more polyamides are selected from PA-6; PA-6,6; PA-6,9; PA-6,10; PA-6,12; PA-11; PA-4,6 and PA-66/6 copolymer. With preference, the one or more polyamides are or comprise PA-6.

For example, the component B is selected from wood fibres, bamboo fibres, flax fibres, hemp fibres, carbon fibres modified with a sizing agent, and any mixture thereof; more preferably, the component B is or comprises wood fibres.

### The compatibilizer and the production of said compatibilizer

According to the invention, the compatibilizer comprises from 5 to 90 wt.% or from 10 to 90 wt.% of polyethylene based on the total weight of the compatibilizer, and has:
- a melt index MI₂ ranging from 5.0 to 200.0 g/10 min as determined according to ISO 1133-2011 at 230 °C under a load of 2.16 kg;
- a complex viscosity at 0.1 rad/sec at 190 °C of at most 1,000 Pa·s; and
- a grafting agent content ranging from 0.3 to 5.0 wt.% based on the total weight of the compatibilizer.

The sub-step of production of the compatibilizer is preferably performed without peroxides and/or without ultrasounds.

For example, the sub-step of grafting of a blend of polyethylene and polypropylene to produce the compatibilizer according to the disclosure comprises:
a) providing an extruder with one or more thermal regulation devices;
b) providing a blend of polyethylene and polypropylene;
c) providing a grafting agent in a content ranging from 0.8 to 10.0 wt.% based on the total weight of the blend of polyethylene and polypropylene provided in step (b), wherein the grafting agent comprises at least one double bound per molecule;
d) extruding the blend of polyethylene and polypropylene and the grafting agent to obtain a grafted polyethylene-polypropylene blend; wherein step (d) of extruding comprises a thermal treatment of the blend of polyethylene and polypropylene at a maximum barrel temperature Ts of at least 315 °C in one or more hot zones of the extruder; and
e) recovering a grafted polyethylene-polypropylene blend being the compatibilizer wherein the content of polyethylene in the blend provided in step b) is selected to have a compatibilizer comprising from 5 to 90 wt.% of polyethylene based on the total weight of the compatibilizer.;

For example, the maximum barrel temperature Ts of at least 315 °C in step (d) is obtained:
- by self-heating of the material wherein the extruder is a twin-screw extruder and the one or more hot zones have a total length equal to or greater than 6 D with D being the screw diameter, wherein the screw profile comprises at least one hot zone with successive kneading blocks elements over a length of at least 4 D followed by a left-handed element with D being the screw diameter, wherein the thermal regulation devices, are set to initial imposed barrel temperatures ranging between 240 and 320 °C, and are switched off when the barrel temperature in the zone spontaneously exceeds the imposed barrel temperature by at least 3 °C without the need of external heat application; with preference, the extrusion is performed with mechanical specific energy greater than or equal to 0.30 kWh/kg,
   or
- by heating the material in an extruder selected from a single screw extruder or a twin screw extruder, using the thermal regulation devices of the extruder to have a maximum barrel temperature Ts ranging from 315 to 430 °C in at least one hot zone of the extruder.

The sub-step of grafting of a blend of polyethylene and polypropylene involves increasing the melt index of the said blend of polyethylene and polypropylene to produce a compatibilizer with a melt index that is increased by a factor k of more than 2.0; preferably by a factor k of at least 3.0; preferably by a factor k of at least 5.0; preferably by a factor k of at least 6.0; preferably by a factor k of at least 8.0; preferably by a factor k of at least 10.0; preferably by a factor k of at least 15.0; preferably by a factor k of at least 20.0; preferably by a factor k of at least 40.0.

So that the ratio of the melt index of the compatibilizer (MI₂ T) to the melt index of the blend of polyethylene and polypropylene (MI₂ R) is more than 2.0; preferably of at least 3.0, preferably by at least 5.0; preferably at least 6.0; preferably at least 8.0; preferably at least 10.0; preferably at least 15.0; preferably at least 20.0; preferably at least 40.0.

The treatment of the blend of polyethylene and polypropylene to obtain a compatibilizer is performed by extrusion wherein step (d) of extruding comprises a thermal treatment of the blend of polyethylene and polypropylene at a maximum barrel temperature Ts of at least 315 °C in one or more hot zones of the extruder; preferably wherein extrusion is performed with a residence time of less than 10 min.

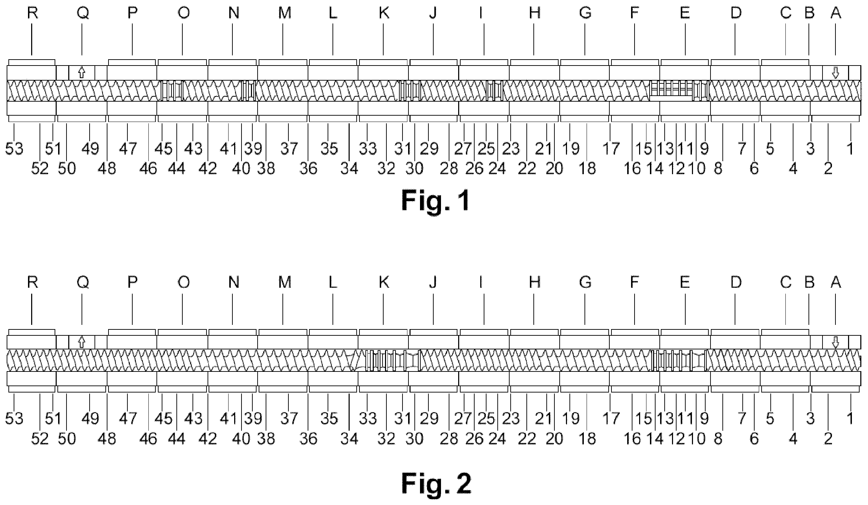

The extruder can be a single-screw extruder or a twin-screw extruder. In a preferred embodiment, the extruder is a twin-screw extruder. The extruder can be a single screw extruder or a twin-screw extruder provided with a standard configuration for the screw profile (for example when the process comprises a thermal treatment by heating the material using the thermal regulation devices) or is a twin-screw extruder provided with a screw profile that shows an aggressive design, as shown in figure 1, to impart high mechanical energy to the blend of polyethylene and polypropylene (for example when the process comprises a thermal treatment by self-heating) or by heating the material using the thermal regulation devices.

As known to the person skilled in the art, thermal regulation devices can be used as heating means to impart thermal energy to the blend of polyethylene and polypropylene in the extruder, in addition to the thermal energy already generated by the mixing.

Extrusion mixing varies with the type of screw and screw profile and is capable of significant generation of mechanical energy, such as shear energy and/or elongation energy. Therefore, energy is introduced into the extrusion process in terms of mechanical energy and thermal energy. Heating and/or cooling of the barrels can be achieved, for example, electrically, by steam, or by the circulation of thermally controlled liquids such as oil or water.

The extruder screw comprises a screw main body, that is composed of cylindrical elements and an axis of rotation supporting the elements. The axis of rotation extends straight from its basal end to its tip. In a state in which the extruder screw is rotatably inserted in the cylinder of the barrel, the basal end of the extruder screw is positioned on one end side of the barrel, on which the supply port is provided, and the tip of the extruder screw is positioned on the other end side of the barrel, on which the discharge port is provided.

Screw extruders have a modular system that allows different screw elements to be drawn into the central shaft to build a defined screw profile. The extruder screw may comprise one or more elements selected from conveying elements, kneading elements, right-handed (normal) screw elements, left-handed (inverse) screw elements and any combination thereof. The elements are arranged in a defined order from the basal end to the tips of the extruder screw and this order, as well as the type and number of elements involved, defines the screw profile. Extruders and screw elements are commercially available for example at Leistritz.

In an embodiment of the disclosure, the treatment of the blend of polyethylene and polypropylene is handled by mechanical energy.

When high mechanical energy is requested, the extruder provided has a specific screw profile that is built to be "aggressive", meaning that high mechanical energy will be imparted to the blend of polyethylene and polypropylene. High mechanical energy will result in an increase in the temperature in the extruder as known to the person skilled in the art so that the thermal treatment is performed by self-heating of the material. Self-heating of the material is achieved from viscous dissipation in a twin-screw extruder.

In such an embodiment, the twin-screw extruder is selected to comprise one or more hot zones, preferably being filled mixing zones, wherein the total length of the one or more hot zones is equal to or greater than 6 D with D being the screw diameter.

It is understood that in case the screw profile is selected to comprise a single hot zone, then the total length of the said hot zone is equal to or greater than 6 D with D being the screw diameter. In such a case, the hot zone is also the melting zone of the twin-screw extruder.

In case, the screw profile comprises two or more hot zones, then a first hot zone comprises successive kneading blocks elements over a length of at least 4 D followed by a left-handed element with D being the screw diameter, and one or more additional hot zones placed downstream the first hot zone are filled mixing zones, each comprising kneading blocks elements over a length of at least 4 D followed by a kneading left-handed element or by a left-handed element with D being the screw diameter. For example, the twin-screw extruder comprises two filled mixing zones wherein each of the filled mixing zones has a length equal to or greater than 4 D with D being the screw diameter. Preferably the first hot zone is or comprises the melting zone of the extruder.

Various mixing elements could be considered in the one or more hot zones but the most preferred ones do not drive any forward conveying (dispersive kneading blocks elements with disks offset by 90 degrees). Other disk offset angles could be considered (for example 30 degrees, 45 degrees, or 60 degrees) but 90 degrees is preferred. The preferred minimum width of the disk is 0.3 D.

Thus, preferably, the successive kneading block elements of at least one hot zone comprise disks with disks offset by 90 degrees and a disk width of at least 0.3 D wherein D is the screw diameter.

For example, the twin-screw extruder comprises more than two filled mixing zones wherein the total length of filled mixing zones is equal to or greater than 8 D with D being the screw diameter.

For example, the strong melting zone of the twin-screw extruder is made of successive mixing elements over a length of 4 D, with D being the screw diameter, followed by a left-handed element; preferably a full-flight left-handed element.

In a preferred embodiment, the thermal regulation devices of the twin-screw extruder allow cooling of the barrels and the process comprises switching off the thermal regulation devices when the barrel temperature in the zone spontaneously exceeds the imposed barrel temperature by at least 1 °C without the need of external heat application; preferably, by at least 2 °C, preferably, by at least 3 °C; more preferably by at least 5 °C; even more preferably, by at least 8 °C; and most preferably, by at least 10 °C.

Indeed, when starting extrusion, thermal regulation devices will be switched on, in particular in the melting zone to allow the material to melt. Then, when the polymer is self-heating the thermal regulation devices are switched off to allow the increase of the temperature inside the extruder.

In a preferred embodiment, step (d) of extruding the blend of polyethylene and polypropylene comprises performing the extrusion with mechanical specific energy greater than or equal to 0.30 kWh/kg, preferably greater than or equal to 0.35 kWh/kg; more preferably greater than or equal to 0.40 kWh/kg; even more preferably greater than or equal to 0.45 kWh/kg; most preferably greater than or equal to 0.50 kWh/kg and even most preferably greater than or equal to 0.60 kWh/kg.

High rotation screw speeds are preferred, but the precise value of a high rotation screw speed is "extruder diameter" dependent. For example, when considering a diameter D of 18 mm twin-screw extruder, high rotational screw speed is considered to be higher than 500 rpm, preferably higher than 800 rpm. For example, when considering a diameter D = 58 mm twin-screw extruder, high rotational screw speed is considered to be higher than 250 rpm, preferably higher than 350 rpm.

Non-limiting examples of suitable extruder screws with specific screw profiles are illustrated in figures 1 and 2.

When the thermal treatment is performed by heating the material in an extruder selected from a single screw extruder or a twin-screw extruder, the extruder provided can show either an extruder screw with a standard screw profile or with a specific screw profile (i.e., for enhanced self-heating).

In such an embodiment, step (d) is performed at a maximum barrel temperature of at least 315 °C; preferably at least 320 °C; more preferably at least 330 °C; even more preferably at least 340 °C.

Whether the thermal treatment is performed by heating or self-heating of the material, the thermal treatment of material in step (d) is preferably performed at a maximum barrel temperature ranging from 315 to 430 °C; preferably, ranging from 320 °C to 420 °C; more preferably ranging from 330 °C to 410 °C; even more preferably, ranging from 340 °C to 400 °C and most preferably, ranging from 350 °C to 395 °C. The maximum barrel temperature Ts is the highest temperature amongst the imposed or measured temperatures along the extruder.

For example, step (d) of extruding the blend of polyethylene and polypropylene comprises a thermal treatment at a maximum barrel temperature of at least 315°C in one or more hot zones of the extruder; preferably at a maximum barrel temperature of at least 320 °C; more preferably at a maximum barrel temperature of at least 330 °C; even more preferably at a maximum barrel temperature ranging from 315 to 430 °C and most preferably at a maximum barrel temperature ranging from 320 to 420 °C, or at a maximum barrel temperature ranging from 330 to 410 °C.

For example, step (d) of extruding the blend of polyethylene and polypropylene comprises a thermal treatment at a maximum barrel temperature ranging from 315 to 430 °C in one or more hot zones of the extruder; preferably at a maximum barrel temperature ranging from 320 to 420 °C; more preferably at a maximum barrel temperature ranging from 330 to 410 °C; even more preferably at a maximum barrel temperature ranging from 340 to 400 °C and most preferably at a maximum barrel temperature ranging from 350 to 395 °C, or at a maximum barrel temperature ranging from 320 to 390 °C.

The extrusion conditions may be adapted by the person skilled in the art to impart sufficient energy to obtain a compatibilizer with a melt index (MI₂ T) in the targeted range.

Screw speed can be adapted in function of the targeted maximum barrel temperature Ts and of the capacity of the extruder. Higher screw speed allows for a higher increase in the polymer temperature. For example, the screw speed ranges from 100 to 1200 rpm; preferably from 110 rpm to 1200 rpm; more preferably from 150 rpm to 1100 rpm; even more preferably from 200 rpm to 1000 rpm; most preferably from 300 rpm to 900 rpm; and even most preferably from 320 to 800 rpm or from 350 to 1200 rpm.

In an 18 mm screw diameter twin-screw extruder, the preferred screw speed is higher than 500 rpm; in a 58 mm screw diameter twin-screw extruder, the preferred screw speed is higher than 250 rpm.

For example, step (d) of extruding the blend of polyethylene and polypropylene comprises performing the extrusion with a residence time of less than 10 minutes, such as ranging from 10 seconds to 10 minutes; preferably with a residence time ranging from 20 seconds to 5 minutes; more preferably with a residence time ranging from 10 to 180 seconds or from 10 to 120 seconds or from 20 to 100 seconds or from 30 to 80 seconds.

For example, the extruder comprises one or more venting parts at the end of the extruder (before the die). Such venting parts, connected to a vacuum pump, allow removing at least a part of the unreacted grafting agent.

For example, the extruder is selected to have a surface treatment. For example, one or more elements of the extruder are made of CrVNb microalloyed steel. Extruders with surface treatments are commercially available from Leistritz.

The process according to the disclosure comprises step (b) of providing a blend of polyethylene and polypropylene comprising at least 80 wt.% of recycled material based on the total weight of the blend of polyethylene and polypropylene.

The blend of polyethylene and polypropylene can be a virgin material, a recycled-containing material or a mixture of virgin and recycled materials. In some embodiments, the blend of polyethylene and polypropylene is a recycled blend of polyethylene and polypropylene. As used herein, the terms "recycled" encompasses both Post-Consumer Resins (PCR) and Post-Industrial Resins (PIR).

Suitable polyethylene to be used in the blend includes but is not limited to homopolymer of ethylene, copolymer of ethylene and a higher alpha-olefin comonomer. Thus, preferably, the polyethylene in the blend of polyethylene and polypropylene is one or more polyethylene homopolymers, one or more polyethylene copolymers, and any mixture thereof.

The term "copolymer" refers to a polymer, which is made by linking two different types of monomers in the same polymer chain. Preferred comonomers are alpha-olefins having from 3 to 20 carbon atoms or from 3 to 10 carbon atoms. More preferred comonomers are selected from the group comprising propylene, butene-1, pentene-1, hexene-1, heptene-1, octene-1, nonene-1, decene-1 and any mixture thereof. Even more preferred comonomers are selected from the group comprising butene-1, hexene-1, octene-1 and any mixture thereof. The most preferred comonomer is hexene-1.

The term "homopolymer" refers to a polymer that is made by linking only one monomer in the absence of comonomers. Ethylene homopolymers are therefore essentially without any comonomer. By "essentially without" it is meant that no comonomer is intentionally added during the production of the polyethylene, but can nevertheless be present in up to 0.2 wt.%, preferably in up to 0.1 wt.% and most preferably in up to 0.05 wt.%, relative to the total weight of the polyethylene.

The blend of polyethylene and polypropylene is selected to comprise at most 90 wt.% of polyethylene based on the total weight of the blend of polyethylene and polypropylene. With preference, the blend of polyethylene and polypropylene is selected to comprise at most 80 wt.% of polyethylene based on the total weight of the blend of polyethylene and polypropylene; preferably, at most 70 wt.%; preferably, at most 60 wt.%; preferably, at most 50 wt.%; preferably, at most 40 wt.%; preferably, at most 30 wt.%; preferably at most 25 wt.% or at most 20 wt.%. The remaining being polypropylene or mostly polypropylene. The content of polyethylene can be determined by ¹³C-NMR.

The blend of polyethylene and polypropylene is selected to comprise at least 1 wt.% of polyethylene based on the total weight of the blend of polyethylene and polypropylene. With preference, the blend of polyethylene and polypropylene is selected to comprise at least 5 wt.% of polyethylene based on the total weight of the blend of polyethylene and polypropylene; preferably, at least 8 wt.%; preferably, at least 10 wt.%; preferably, at least 12 wt.%; preferably, at least 15 wt.%; preferably, at least 18 wt.%; preferably least 20 wt.%. The remaining being polypropylene or mostly polypropylene.

The blend of polyethylene and polypropylene comprises from 5 to 90 wt.% or from 10 to 90 wt.% of polyethylene based on the total weight of the blend; from 12 to 75 wt.%; more preferably, from 15 to 70 wt.% or from 18 to 60 wt.%; even more preferably ranging from 20 to 50 wt.%; and most preferably ranging from 20 to 45 wt.% or from 5 to 40 wt.%. The content of polyethylene in the blend can be determined by ¹³C-NMR.

In an embodiment, the blend of polyethylene and polypropylene a recycled material. Recycled material may contain one or more polymers different from polyethylene and polypropylene.

In an embodiment, and in particular wherein the blend of polyethylene and polypropylene is a recycled material; the blend of polyethylene and polypropylene may comprise at least one polymer different from polyethylene or polypropylene wherein at least one polymer different from polyethylene and polypropylene is selected from polyacrylate, polyethylene terephthalate (PET), polystyrene (PS), polylactic acid (PLA).

For example; the blend of polyethylene and polypropylene comprises at least one polymer different from polyethylene and polypropylene in a content ranging from 0 to 5 wt.% of the based on the total weight of the blend of polyethylene and polypropylene wherein at least one polymer different from polyethylene is selected from polyacrylate, polyethylene terephthalate (PET), polystyrene (PS), polylactic acid (PLA), and any mixture thereof; preferably in a content ranging from 0.1 to 4 wt.% of the based on the total weight of the blend of polyethylene and polypropylene; preferably from 0.2 to 3 wt.%; more preferably from 0.3 to 2.5 wt.%; and even more preferably from 0.4 to 2 wt.%. The content of the at least one polymer different from polypropylene can be determined by ¹³C-NMR.

In an embodiment, the polyethylene in the blend of polyethylene and polypropylene, has a high load melt index (HLMI R) of at least 1.0 g/10 min as determined according to ISO 1133-2011 at 190 °C under a load of 21.6 kg; preferably at least 1.2 g/10 min; more preferably at least 1.5 g10 min.

In an embodiment, the polyethylene in the blend of polyethylene and polypropylene, has a melt index (MI₂ R) of at least 0.10 g/10 min as determined according to ISO 1133-2011 at 190 °C under a load of 2.16 kg; preferably at least 0.15 g/10 min; more preferably at least 0.2 g/10 min; even more preferably at least 0.5 g/10 min. most preferably at least 0.8 g/10 min and even most preferably at least 0.9 g/10 min, or at least 1.0 g/10 min.

For example, the polyethylene in the blend of polyethylene and polypropylene, is selected to have a melt index ranging from a high load melt index (HLMI R) as determined according to ISO 1133-2011 at 190 °C under a load of 21.6 kg of at least 1.0 g/10 min to a melt index (MI₂ R) of at most 3.0 g/10 min as determined according to ISO 1133-2011 at 190 °C under a load of 2.16 kg.

In an embodiment the polyethylene in the blend of polyethylene and polypropylene has a melt index (MI₂ R) of at most 3.0 g/10 min as determined according to ISO 1133-2011 at 190 °C under a load of 2.16 kg; preferably at most 2.8 g/10 min; more preferably at most 2.5 g/10 min; even more preferably at most 2.2 g/10 min. most preferably at most 2.0 g/10 min and even most preferably at most 1.8 g/10 min, or at most 1.6 g/10 min.

For example, the polyethylene in the blend of polyethylene and polypropylene, has a density of at least 0.910 g/cm³ as determined according to ISO 1183-1:2012 at 23 °C.

In an embodiment, the polyethylene in the blend of polyethylene and polypropylene is selected to have a high load melt index (HLMI R) of at least 1.0 g/10 min as determined according to ISO 1133-2011 at 190 °C under a load of 21.6 kg, a melt index (MI₂ R) of at most 0.45 g/10 min as determined according to ISO 1133-2011 at 190 °C under a load of 2.16 kg and a density of at least 0.940 g/cm³ as determined according to ISO 1183-1:2012 at 23 °C.

For example, the polyethylene in the blend of polyethylene and polypropylene has a density of at least 0.940 g/cm³ as determined according to ISO 1183-1:2012 at 23 °C; preferably, at least preferably, at least 0.945 g/cm³; more preferably, at least 0.948 g/cm³; even more preferably of at least 0.950 g/cm³; and most preferably, of at least 0.951 g/cm³.

For example, polyethylene in the blend of polyethylene and polypropylene has a density of at most 0.965 g/cm³ as determined according to ISO 1183-1:2012 at 23 °C; preferably, of at most 0.962 g/cm³; and more preferably, of at most 0.960 g/cm³.

For example, the polyethylene in the blend of polyethylene and polypropylene has a density ranging from 0.940 g/cm³ to 0.965 g/cm³ as determined according to ISO 1183-1:2012 at 23 °C; preferably, ranging from 0.942 g/cm³ to 0.964 g/cm³; more preferably, ranging from 0.945 g/cm³ to 0.962 g/cm³; and even more preferably, ranging from 0.948 g/cm³ to 0.960 g/cm³.

For example, the polyethylene in the blend of polyethylene and polypropylene has a melt index ranging from a high load melt index (HLMI R) as determined according to ISO 1133-2011 at 190 °C under a load of 21.6 kg of at least 1.0 g/10 min to a melt index (MI₂ R) of at most 0.45 g/10 min as determined according to ISO 1133-2011 at 190 °C under a load of 2.16 kg.

For example, the polyethylene in the blend of polyethylene and polypropylene has a high load melt index (HLMI R) of at least 1.0 g/10 min as determined according to ISO 1133-2011 at 190 °C under a load of 21.6 kg; preferably at least 1.2 g/10 min; more preferably at least 1.5 g/10 min.

For example, the polyethylene in the blend of polyethylene and polypropylene has a melt index (MI₂ R) of at most 0.45 g/10 min as determined according to ISO 1133-2005 at 190 °C under a load of 2.16 kg; preferably, at most 0.42 g/10 min; more preferably at most 0.40 g/10 min; even more preferably ranging at most 0.35 g/10 min.

In another embodiment, the polyethylene in the blend of polyethylene and polypropylene is selected to have a melt index (MI₂ R) ranging from 0.8 to 1.5 g/10 min as determined according to ISO 1133-2011 at 190 °C under a load of 2.16 kg and a density of ranging from 0.910 g/cm³ to 0.930 g/cm³ as determined according to ISO 1183-1:2012 at 23 °C.

With preference, the polyethylene in the blend of polyethylene and polypropylene has a density of at least 0.910 g/cm³ as determined according to ISO 1183-1:2012 at 23 °C; preferably, at least preferably, at least 0.912 g/cm³; more preferably, at least 0.915 g/cm³; and even more preferably of at least 0.916 g/cm³.

For example, the polyethylene in the blend of polyethylene and polypropylene has a density of at most 0.930 g/cm³ as determined according to ISO 1183-1:2012 at 23 °C; preferably, of at most 0.928 g/cm³; and more preferably, of at most 0.925 g/cm³.

For example, the polyethylene in the blend of polyethylene and polypropylene has a density ranging from 0.910 g/cm³ to 0.930 g/cm³ as determined according to ISO 1183-1:2012 at 23 °C; preferably, ranging from 0.912 g/cm³ to 0.928 g/cm³; more preferably, ranging from 0.915 g/cm³ to 0.925 g/cm³; and even more preferably, ranging from 0.916 g/cm³ to 0.925 g/cm³.

For example, the polyethylene in the blend of polyethylene and polypropylene has a melt index (MI₂ R) ranging from 0.8 to 1.5 g/10 min as determined according to ISO 1133-2011 at 190 °C under a load of 2.16 kg; preferably, ranging from 0.8 to 1.4 g/10 min; more preferably ranging from 0.9 to 1.3 g/10 min; even more preferably ranging from 1.0 to 1.2 g/10 min.

In some embodiments, the polyethylene in the blend of polyethylene and polypropylene has an Mz/Mw of at least 4.0 as determined by gel permeation chromatography; preferably, ranging from 4.0 to 50.0; preferably, from 5.0 to 25.0; preferably, from 7.0 to 15.0.

In some embodiments, the polyethylene in the blend of polyethylene and polypropylene has a complex viscosity at 0.1 rad/sec at 190 °C of ranging from 20,000 to 80,000 Pa·s; preferably, ranging from 22,000 to 70,000 Pa·s; more preferably, ranging from 25,000 to 60,000 Pa·s; and even more preferably, ranging from 30,000 to 50,000 Pa·s.

In some embodiments, the polyethylene in the blend of polyethylene and polypropylene has an Mw/Mn ranging from 5.0 to 30.0 as determined by gel permeation chromatography; preferably ranging from 6.0 to 20.0; preferably ranging from 7.0 to 15.0.

In some embodiments, the polyethylene in the blend of polyethylene and polypropylene has a complex viscosity ratio above 10; preferably, a complex viscosity ratio of at least 11; more preferably, a complex viscosity ratio of at least 12.

The polypropylene in the blend of polyethylene and polypropylene is selected to have a melt index (MI₂ R) ranging from 0.1 to 20.0 g/10 min as determined according to ISO 1133-2011 at 230 °C under a load of 2.16 kg; preferably ranging from 0.2 to 10.0 g/10 min; more preferably ranging from 0.5 to 5.0 g/10 min; even more preferably ranging from 0.8 to 3.0 g/10 min.

For example, the polypropylene in the blend of polyethylene and polypropylene is selected from a propylene homopolymer, a random copolymer of propylene, a heterophasic copolymer of propylene, or a mixture thereof

### The grafting agent and the step (c) of providing a grafting agent

The process according to the disclosure comprises a step (c) of providing a grafting agent comprising at least one double bound per molecule. For example, the grafting agent comprises at least one vinyl group per molecule.

For example, the grafting agent comprises or consists of one or more functional monomers selected from maleic anhydride (MAH), glycidyl methacrylate (GMA), methyl methacrylate (MMA), acrylic acid (AAc), butyl acrylate (BA) vinyl acetate (VA), diethyl maleate (DEM), acrylamide (AAm), acrylonitrile (CAN), and any mixture thereof. With preference, the grafting agent is or comprises maleic anhydride (MAH).

The grafting agent is provided in a content ranging from 0.1 to 10.0 wt.% or from 0.5 to 10.0 wt.% or from 0.8 to 10.0 wt.% based on the total weight of the blend of polyethylene and polypropylene; preferably, from 0.9 to 8.0 wt.%; more preferably, from 1.0 to 6.0 wt.%; even more preferably, from 1.1 to 5.5 wt.%; most preferably, from 1.2 to 5.0 wt.%; even most preferably, from 1.3 to 4.5 wt.%; or from 1.5 to 4.0 wt.%; or from 2.0 to 5.0 wt.%.

For example, the grafting agent is provided in a content of at least 0.1 wt.% or at least 0.2 wt.% or at least 0.5 wt.% or at least 0.7 wt.% or at least 0.8 wt.% or at least 0.9 wt.% based on the total weight of the blend of polyethylene and polypropylene; preferably, at least 1.0 wt.%; more preferably at least 1.1wt.%; even more preferably at least 1.2 wt.%; most preferably at least 1.3 wt.% and even most preferably at least 1.5 wt.% or at least 1.8 wt.%; or at least 2.0 wt.%.

For example, the grafting agent is provided in a content of at most 10.0 wt.% or at most 8.0 wt.% based on the total weight of the blend of polyethylene and polypropylene; preferably, at most 6.0 wt.%; more preferably, at most 5.5 wt.%; even more preferably at most 5.0 wt.%; most preferably at most 4.5 wt.% and even most preferably at most 4.0 wt.%.

The grafting agent is introduced in the extruder by the main hoper, for example via a specific dosing system, or via a lateral injection in the extruder; preferably, the grafting agent is introduced via the main hoper.

The step of providing a grafting agent may further comprise providing one or more additives in addition to the grafting agent. For example, one or more additives such as, by way of example, antioxidants, light stabilizers, acid scavengers, flame retardants, lubricants, antistatic additives, nucleating/clarifying agents, colourants, slip agents, anti-blocking agents, processing aids and any mixture thereof.

Although peroxides are not required, in an embodiment, the process further comprises providing one or more peroxides in addition to the grafting agent.

For example, the content of peroxide is at most 1000 ppm based on the total weight of the blend of polyethylene and polypropylene; preferably at most 800 ppm; more preferably at most 500 ppm; even more preferably at most 200 ppm and most preferably at most 100 ppm.

For example, the content of peroxides is ranging from 0 to 1000 ppm based on the total weight of the blend of polyethylene and polypropylene; preferably from 10 to 800 ppm; more preferably from 20 to 500 ppm, even more preferably from 30 to 250 ppm and most preferably from 50 to 100 ppm.

For example, the one or more peroxides are or comprise organic peroxides selected from the group consisting of diacetyl peroxide, cumyl-hydro-peroxide, dibenzoyl peroxide, dialkyl peroxide, 2,5-methyl-2,5-di(terbutylperoxy)-hexane, and combinations thereof.

In a preferred embodiment, the process is devoid of a step of providing one or more peroxides in addition to the grafting agent. In such an embodiment no peroxides are used so that the content of peroxide is 0 ppm.

### The compatibilizer and the step (e) recovering a grafted polyethylene-polypropylene blend being the compatibilizer

Step (e) comprises recovering a compatibilizer that is the grafted and treated blend of polyethylene and polypropylene.

For example, the compatibilizer has a melt index MI₂ ranging from 5.0 to 300.0 g/10 min or from 5.0 to 250.0 g/10 min as determined according to ISO 1133-2011 at 190 °C under a load of 2.16 kg; preferably ranging from 5.0 to 200.0 g/10 min or from 10.0 to 180.0 g/10 min; even more preferably from 20.0 to 160.0 g/10 min or from 25.0 to 150.0 g/10 min, most preferably from 30.0 to 140.0 g/10 min; and even most preferably from 35.0 to 130.0 g/10 min, or from 38.0 to 120.0 g/10 min or from 40.0 to 110.0 g/10 min.

For example, the compatibilizer has a melt index MI₂ of at most 300.0 /10 min as determined according to ISO 1133-2011 at 230 °C under a load of 2.16 kg; preferably, at most 250.0 g/10 min or at most 200.0 g/10 min; more preferably, at most 180.0 g/10 min or at most 160.0 g/10 min; even more preferably, at most 150.0 g/10 min; most preferably, at most 140.0 g/10 min; and even most preferably at most 130.0 g/10 min, or at most 120.0 g/10 min or at most 110.0 g/10 min.

For example, the compatibilizer has a melt index MI₂ of at least 5.0 g/10 min as determined according to ISO 1133-2011 at 230 °C under a load of 2.16 kg; preferably, at least 7.0 g/10 min or at least 10.0 g/10 min or at least 20 g/10 min or at least 25 g/10 min; more preferably, at least 30 g/10 min or at least 35 g/10 min at least 40 g/10 min; even more preferably, at least 42.0 g/10 min.

In an embodiment wherein the compatibilizer comprises from 45 to 90 wt.% of polyethylene, the compatibilizer has a melt index MI₂ ranging from 40.0 to 200.0 g/10 min or from 41.0 to 150.0 g/10 min as determined according to ISO 1133-2011 at 230 °C under a load of 2.16 kg..

In an embodiment wherein the compatibilizer comprises from 10 to 55 wt.% of polyethylene, the compatibilizer has a melt index MI₂ ranging from 5.0 to 60.0 g/10 min or from 25.0 to 50.0 g/10 min as determined according to ISO 1133-2011 at 230 °C under a load of 2.16 kg.

For example, the grafting agent is present in the compatibilizer at a content ranging from 0.3 to 5.0 wt.% based on the total weight of the compatibilizer; preferably from 0.3 to 4.0 wt.%; more preferably from 0.4 to 3.5 wt.%; even more preferably from 0.5 to 2.5 wt.%; and most preferably from 0.6 to 2.2 wt.%. It is understood that the grafting agent content represents the grafted content as determined by titration and does not include the unreacted grafting agent. In other words, the grafting agent content determination is performed after purification as described in the methods. Purification can include a venting procedure performed at the end of the extruder. The compatibilizer (i.e., the grafted polyethylene-polypropylene blend) corresponds to the starting material that has been grafted and thermally treated to increase the melt index.

In particular, it was found that the compatibilizer has a ratio of complex viscosity at a frequency of 0.1 rad/sec to the complex viscosity at a frequency of 100 rad/sec of at most 20, said ratio being measured at 190 °C; preferably, of at most 18; preferably, of at most 15; preferably, of at most 12; preferably, of at most 10.0; preferably, of at most 9.0; more preferably, of at most 8.5; even more preferably, of at most 8.0; and most preferably, of at most 7.0.

In an embodiment, the compatibilizer has a complex viscosity at 0.1 rad/sec at 190 °C of at most 1,000 Pa·s; preferably at most 900 Pa.s; preferably at most 800 Pa.s; preferably at most 700 Pa.s; more preferably at most 600 Pa.s; even more preferably of at most 500 Pa.s most preferably of at most 400 Pa.s; and even most preferably of at most 300 Pa.s; or at most 200 Pa.s,

In an embodiment, the compatibilizer has a complex viscosity at 0.1 rad/sec at 190 °C ranging from 200 to 25,000 Pa·s; preferably from 250 to 22,000 Pa.s; preferably from 300 to 20,000 Pa.s; preferably from 350 to 18,000 Pa.s; more preferably from 380 to 15,000 Pa.s; even more preferably from 400 to 12,000 Pa.s; most preferably from 410 to 10,000 Pa.s; and even most preferably from 410 to 9,000 Pa.s; or from 400 to 8,000 Pa.s, or from 400 to 5,000 Pa.s.

With preference, the compatibilizer has an Mz/Mw of at most 7.0 as determined by size exclusion chromatography; preferably at most 6.0; preferably at most 5.0.

For example, the compatibilizer further has an Mw/Mn ranging from 2.0 to 4.5 as determined by size exclusion chromatography; preferably from 2.1 to 4.4; more preferably from 2.2 to 4.2; even more preferably from 2.3 to 4.0 or from 2.4 to 3.9.

For example, the compatibilizer further has a tan delta (G"/G') at 0.1 rad at 190 °C above 2.5; preferably of at least 3.0; more preferably of at least 5.0 and even more preferably of at least 10.0.

### Test methods

The melt flow index MI₂ of the polyethylene is determined according to ISO 1133-2011 at 190 °C under a load of 2.16 kg.

The HLMI of the polyethylene is determined according to ISO 1133-2011 at 190 °C under a load of 21.6 kg.

The melt flow index MI₂ of the polypropylene is determined according to ISO 1133-2011 at 230 °C under a load of 2.16 kg.

The HLMI of the polypropylene is determined according to ISO 1133-2011 at 230 °C under a load of 21.6 kg.

The Mn, Mw, Mz, Mw/Mn and Mz/Mw: The molecular weight (Mₙ (number average molecular weight), M_{w} (weight average molecular weight) and molecular weight distributions D (Mw/Mn) and D' (Mz/Mw) were determined by size exclusion chromatography (SEC. Briefly, a GPC-IR5 from Polymer Char was used: 10 mg polyethylene sample was dissolved at 160 °C in 10 ml of trichlorobenzene for 1 hour. Injection volume: about 400 µl, automatic sample preparation and injection temperature: 160 °C. Column temperature: 145 °C. Detector temperature: 160 °C. Two Shodex AT-806MS (Showa Denko) and one Styragel HT6E (Waters) columns were used with a flow rate of 1 ml/min (eluent: trichlorobenzene). Detector: Infrared detector (2800-3000 cm⁻¹). Calibration: narrow standards of polystyrene (PS) (commercially available). Calculation of molecular weight Mi of each fraction i of eluted polyethylene is based on the Mark-Houwink relation (log₁₀(M_{PE}) = 0.965909 x log₁₀(M_{PS}) - 0.28264) (cut off on the low molecular weight end at M_{PE} = 1000).

The molecular weight averages used in establishing molecular weight/property relationships are the number average (Mₙ), weight average (M_{w}) and z average (M_{z}) molecular weight. These averages are defined by the following expressions and are determined from the calculated Mᵢ: ${M}_{n} = \frac{{\sum }_{i} {N}_{i} {M}_{i}}{{\sum }_{i} {N}_{i}} = \frac{{\sum }_{i} {W}_{i}}{{\sum }_{i} {W}_{i} / {M}_{i}} = \frac{{\sum }_{i} {h}_{i}}{{\sum }_{i} {h}_{i} / {M}_{i}}$ ${M}_{w} = \frac{{\sum }_{i} {N}_{i} {M}_{i}^{2}}{{\sum }_{i} {N}_{i} {M}_{i}} = \frac{{\sum }_{i} {W}_{i} {M}_{i}}{{\sum }_{i} {W}_{i}} = \frac{{\sum }_{i} {h}_{i} {M}_{i}}{{\sum }_{i} {h}_{i}}$ ${M}_{z} = \frac{{\sum }_{i} {N}_{i} {M}_{i}^{3}}{{\sum }_{i} {N}_{i} {M}_{i}^{2}} = \frac{{\sum }_{i} {W}_{i} {M}_{i}^{2}}{{\sum }_{i} {W}_{i} {M}_{i}} = \frac{{\sum }_{i} {h}_{i} {M}_{i}^{2}}{{\sum }_{i} {h}_{i} {M}_{i}}$

Here Nᵢ and Wᵢ are the number and weight, respectively, of molecules having molecular weight Mi. The third representation in each case (farthest right) defines how one obtains these averages from SEC chromatograms. hᵢ is the height (from baseline) of the SEC curve at the iₜₕ elution fraction and Mᵢ is the molecular weight of species eluting at this increment.

The molecular weight distribution (MWD) is then calculated as Mw/Mn.

The ¹³C-NMR analysis is performed using a 400 MHz or 500 MHz Bruker NMR spectrometer under conditions such that the signal intensity in the spectrum is directly proportional to the total number of contributing carbon atoms in the sample. Such conditions are well-known to the skilled person and include, for example, sufficient relaxation time etc. In practice, the intensity of a signal is obtained from its integral, *i.e.,* the corresponding area. The data are acquired using proton decoupling, 2000 to 4000 scans per spectrum with 10 mm room temperature through or 240 scans per spectrum with a 10 mm cryoprobe, a pulse repetition delay of 11 seconds, and a spectral width of 25000 Hz (+/- 3000 Hz). The sample is prepared by dissolving a sufficient amount of polymer in 1,2,4-trichlorobenzene (TCB, 99%, spectroscopic grade) at 130 °C and occasional agitation to homogenize the sample, followed by the addition of hexadeuterobenzene (C₆D₆, spectroscopic grade) and a minor amount of hexamethyldisiloxane (HMDS, 99.5₊ %), with HMDS serving as an internal standard. To give an example, about 200 mg to 600 mg of polymer is dissolved in 2.0 mL of TCB, followed by the addition of 0.5 mL of C₆D₆ and 2 to 3 drops of HMDS.

Following data acquisition, the chemical shifts are referenced to the signal of the internal standard HMDS, which is assigned a value of 2.03 ppm.

The comonomer content in polyethylene is determined by ¹³C-NMR analysis of pellets according to the method described by G.J. Ray et al. (Macromolecules, 1977, 10, (4), 773-778).

The density was measured according to the method of standard ISO 1183-1:2012 (immersion method) at a temperature of 23 °C.

Complex shear modulus and viscosity: The complex shear modulus G*(w)=G'(w)+jG"(w) (J²=-1, G'(w): storage modulus and G"(w): loss modulus) was determined using a DHR-2, a stress-controlled rheometer from TA Instruments. Frequency sweeps have been carried out in the linear domain (1 % strain) at 190°C from 100 to 0.01 rad.s⁻¹ under nitrogen flow to prevent thermal oxidative degradation. The used geometry was 25 mm diameter parallel plates with a 2 mm gap. The samples (25 mm diameter, 2 mm thickness) for these experiments were obtained beforehand using an injection press (Babyplast type). The complex viscosity *η**(*ω*) is calculated according to the following equation of the linear viscoelasticity: $\left|η*\left(ω\right)\right| = {\left[{\left(\frac{G ′ \left(ω\right)}{ω}\right)}^{2}+{\left(\frac{G " \left(ω\right)}{ω}\right)}^{2}\right]}^{1 / 2}$

### Determination of the MA content (titration)

Few grams of the grafted product are purified in a vacuum oven at 140 °C for 24h, this step is crucial to remove all of the unreacted maleic acid by evaporation beyond the melting temperature of the polymer. This step is not needed when a venting procedure is performed at the end of the extruder.

The grafted maleic anhydride reacts with water hence forming the maleic acid form (diacid) which is optically active due to the presence of one asymmetric carbon in its molecule. 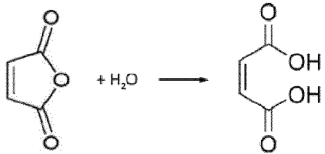 *Hydrolysis of maleic anhydride to form maleic acid.*

The MA content of the purified products is calculated from the acid number. 0.5 g of the grafted polymer with maleic anhydride are dissolved in xylene at 120 °C in a flask with high agitation for 30 min. Then water drops are added to the solution after lowering the temperature to c.a. 100 °C. The hot solution is then titrated immediately with ethanolic 0.05N KOH using three to four drops of 1% thymol blue in DMF indicator, the equivalence is observed when the solution turns from clear yellow to blue. A 0.5 - 1.0 mL excess of KOH solution is added, and the deep blue color was back -titrated to yellow end point by the addition of 0.05N isopropanolic HCl to the hot solution. The ethanolic KOH solution is previously standardized against a solution of known concentration of potassium hydrogen phthalate in water using phenolphthalein indicator.

The acid number and the maleic anhydride content were calculated as follows: $Acid Number \left(mg KOH/g\right) = \frac{{V}_{eq} \times {N}_{KOH} \times 56 , 1}{{m}_{polymer - g - MA}}$ $MA \left(%\right) = \frac{acid number \times 98}{2 \times 561}$

The grafted MA content is classified into 4 categories:
- Low: 0.2 - 0.5 %
- Medium : 0.5 - 0.8 %
- High : 0.8 - 1 %
- Very high : above 1% (1 - 1.5 %)
- Ultra high : above 1.5 %

The Young Modulus, Strain at Break, Stress at Break, were determined according to ISO-527-2: Uniaxial tensile strength tests were performed on a Shimadzu AG-X testing machine equipped with a 10 kN cell and an extensometer at room temperature. To comply with ISO-527-2 standard, the testing speed was 50 mm/min to measure yield stress and elongation at break, and 1 mm/min to determine the Young's modulus. 10 DAM (dry-as-molded) samples were tested for each formulation.

The Impact Strength was determined according to ISO 179/1eC : C-Notched Charpy impact test samples were performed on DAM samples (80 x 10 x 4 mm) at ambient temperature following ISO 179/1eC. At least ten samples were tested for each series to assure good reproducibility of the measurements.

### Examples

The following non-limiting examples illustrate the disclosure

### Example 1 - preparation of the inventive grafted PP-PE blend

Both the polyethylene and the polypropylene were selected to be virgin materials.

PE1 = Polyethylene HDPE 5502 commercialised by TotalEnergies. The density according to ISO 1183-1:2012 is 0.954 g/cm³; the MI₂ according to ISO 1133-2011 (190 °C, 2.16 kg) is 0.25 g/10 min; the HLMI according to ISO 1133-2011 (190 °C, 21.6 kg) is 22 g/10 min. The polyethylene was produced using a chromium-based catalyst.

The storage modulus (G') at 0.1 rads and at 190 °C was measured to be 1,855 Pa and the loss modulus (G") at 0.1 rads and at 190 °C was measured to be 2,798 Pa; resulting in a tan delta (G"/G') of 1.5.

PP1 = PPH3060 commercialised by TotalEnergies. The MI2 the MI₂ according to ISO 1133-2011 (230°C, 2.16 kg) is 1.8 g/10 min.

Table 1 provides the molar mass distribution obtained using size exclusion chromatography.

**Table 1**

| | Mn (Da) | Mw (Da) | Mz (Da) | Mw/Mn | Mz/Mw |
|---|---|---|---|---|---|
| PE1 | 19,000 | 150,000 | 1,380,000 | 8 | 9.2 |
| PP1 | 65,000 | 464,000 | 2,000,000 | 7.1 | 4.5 |

Both PE1 and PP1 were elected as, from a melt index point of view, they are representative of the melt index of important recycled polyethylene feedstocks.

### The maleic anhydride

MA1 = is a commercial maleic anhydride provided by sigma Aldrich (Merck) and received in flake forms. It is micronized and used directly in the process. Maleic anhydride rapidly hydrolyzes to form maleic acid in the presence of water.

**Table 2: Characteristics and properties of maleic anhydride.**

| | |
|---|---|
| Preferred name | Furan-2,5-dione |
| CAS Number | 108-31-6 |
| Molar Mass (g/mol) | 98.06 |
| Formula | C2H2(CO)2O |
| Melting point (°C) | 52.8 |
| Boiling point (°C) | 202 |
| Appearance | White crystals or needles, flakes/powder |
| Density (g/cm³) | 1.48 |
| Structure | 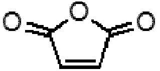 |

### The screw profile P1

The products were obtained by twin screw extrusion using a co-rotating extruder from Leistritz ZSE18 MAXX/HPe 68D (cylinder diameter = 18 mm) with 1200 rpm as the maximum speed. This extruder includes 17 heating/cooling (ZIK) zones (excluding the die) that withstand a maximum temperature of 450 °C. The feeding was exclusively made in the feeding zone and was made by gravimetry. The diameter of the die is 3 mm.

The screw profile P1 is illustrated in figure 1 and is composed of four major segments:
The first segment is the one of the feeding zones, composed of successive conveying elements. The second segment is composed of progressive high shear screw elements successive kneading block elements with disks offset by 30 degrees, 60 degrees, and 90 degrees and a disk width of at least 0.3 D wherein D is the screw diameter. The third segment consists of alternating conveying screw elements and kneading block elements. The third segment comprises the hot zone of the extruder.

The fourth and last segment consists of conveying elements and the die.

The temperature profile starts with a low temperature in the feeding zone (65 °C) and is increased progressively to 250 °C in the second segment (blending-fusion segment, Z3-Z5). Then the temperature is increased progressively in Z6-Z7 (300 and 320 °C respectively) to reach the high-temperature Tₛ fixed in the zones Z8-Z12. Afterwards, the temperature is lowered progressively until it reaches 200 °C in Z17 and the die to cool the melt. The one or more hot zones of the extruder are hence aimed in the zones Z8-Z12.

The screw profile P1

| No. element | mm | Leistritz name |
|---|---|---|
| 1 | 30 | GFA-2-20-30 |
| 2 | 60 | GFF-2-30-30-A |
| 3 | 90 | GFF-2-30-30-A |
| 4 | 120 | GFF-2-30-30-A |
| 5 | 150 | GFA-2-30-30 |
| 6 | 165 | GFA-2-30-15 |
| 7 | 195 | GFA-2-20-30 |
| 8 | 225 | GFA-2-20-30 |
| 9 | 240 | KB 4-2-15-30°-Re |
| 10 | 255 | KB 4-2-15-30°-Re |
| 11 | 270 | KB 4-2-15-60°-Re |
| 12 | 285 | KB 4-2-15-60°-Re |
| 13 | 300 | KB 4-2-15-90° |
| 14 | 315 | KB 4-2-15-90° |
| 15 | 330 | GFA-2-20-15 |
| 16 | 360 | GFA-2-30-30 |
| 17 | 390 | GFA-2-30-30 |
| 18 | 420 | GFA-2-30-30 |
| 19 | 450 | GFA-2-30-30 |
| 20 | 465 | GFA-2-20-15 |
| 21 | 480 | GFA-2-20-15 |
| 22 | 510 | GFA-2-20-30 |
| 23 | 540 | GFA-2-20-30 |
| 24 | 555 | KB 4-2-15-30°-Re |
| 25 | 570 | KB 4-2-15-60°-Re |
| 26 | 585 | GFA-2-20-15 |
| 27 | 600 | GFA-2-20-15 |
| 28 | 630 | GFA-2-20-30 |
| 29 | 660 | GFA-2-20-30 |
| 30 | 675 | KB 4-2-15-60°-Re |
| 31 | 690 | KB 4-2-15-90° |
| 32 | 720 | GFA-2-30-30 |
| 33 | 750 | GFA-2-30-30 |
| 34 | 780 | GFA-2-30-30 |
| 35 | 810 | GFA-2-30-30 |
| 36 | 840 | GFA-2-20-30 |
| 37 | 870 | GFA-2-20-30 |
| 38 | 900 | GFA-2-20-30 |
| 39 | 915 | KB 4-2-15-30°-Re |
| 40 | 930 | KB 4-2-15-60°-Re |
| 41 | 960 | GFA-2-30-30 |
| 42 | 990 | GFA-2-20-30 |
| 43 | 1020 | GFA-2-20-30 |
| 44 | 1035 | KB 4-2-15-60°-Re |
| 45 | 1050 | KB 4-2-15-60°-Re |
| 46 | 1080 | GFA-2-30-30 |
| 47 | 1110 | GFA-2-30-30 |
| 48 | 1140 | GFA-2-30-30 |
| 49 | 1170 | GFA-2-30-30 |
| 50 | 1200 | GFA-2-30-30 |
| 51 | 1215 | GFA-2-20-15 |
| 52 | 1245 | GFA-2-20-30 |
| 53 | 1275 | GFA-2-20-30 |

The barrel configuration

| No. element | mm | Leistritz name |
|---|---|---|
| A | 75 | Zyl-E |
| B | 76 | Wärmesperre |
| C | 151 | Zyl-0/MC |
| D | 226 | Zyl-0/MC |
| E | 301 | Zyl-0/MC |
| F | 376 | Zyl-0/MC |
| G | 451 | Zyl-0/MC |
| H | 526 | Zyl-0/MC |
| I | 601 | Zyl-0/MC |
| J | 676 | Zyl-0/MC |
| K | 751 | Zyl-0/MC |
| L | 826 | Zyl-0/MC |
| M | 901 | Zyl-0/MC |
| N | 976 | Zyl-0/MC |
| O | 1051 | Zyl-0/MC |
| P | 1126 | Zyl-0/MC |
| Q | 1201 | Zyl-1/MC |
| R | 1276 | Zyl-0/MG |

### The grafting by extrusion at high temperature and the results

The products were obtained by twin screw extrusion using a co-rotating extruder from Leistritz ZSE18 MAXX/Hpe 68D (cylinder diameter = 18 mm) with 1200 rpm as the maximum speed. This extruder includes 17 heating/cooling (ZIK) zones (excluding the die) that withstand a maximum temperature of 390 °C. The feeding was exclusively made in the feeding zone and was made by gravimetry. The diameter of the die is 3 mm.

The polymer joint is driven in a cooling water bath of 2.5 m tall that ends with an airflow drying system before entering the pelletizer. The extruder is equipped with 3 efficient fume extraction arms.

3 wt.% of the maleic anhydride, MA was introduced in the blends. The content of PP varied from a PP content of 0 wt.% to 100 wt.% based on the total weight of the polypropylene and polyethylene of the blends.

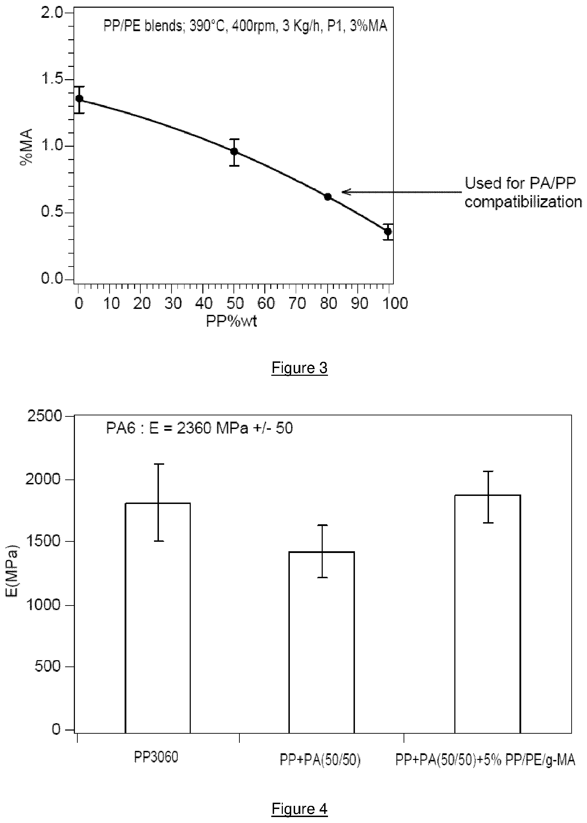

The grafting results are provided in figure 3. It can be seen that the grafted MA content decreased with the increase of the content of PP in the PP/PE blend. It can be concluded that, within the blend, the polyethylene is more grafted compared to polypropylene.

### Melt index measurement

| N° Echantillon | Composition | MI2 (dg min-1)* |
|---|---|---|
| 1 | PP + PE 20/80 | 7.17 |
| 2 | PP + PE 20/80 | 7.14 |
| 3 | PP + PE 50/50 | 6.54 |
| 4 | PP + PE 50/50 | 6.59 |
| 5 | PP + PE 80/20 | 11.13 |
| 6 | PP + PE 80/20 | 11.08 |
| 7 | PP + PE + MA 20/80/3 | 45.08 |
| 8 | PP + PE + MA 20/80/3 | 44.34 |
| 9 | PP + PE + MA 50/50/3 | 41.82 |
| 10 | PP + PE + MA 50/50/3 | 43.53 |
| 11 | PP + PE + MA 80/20/3 | 97.77 |
| 12 | PP + PE + MA 80/20/3 | 101.88 |

| | | |
|---|---|---|
| * MI2 "condition PE»: 2.16 kg / 190°C | | |

The MA-g-PE-PP compatibilizers comprising about 50 wt.% of polypropylene and grafted MA content of 1.0 wt.% were found to have a MI₂ as determined ISO 1133-2011 at 190 °C under a load of 2.16 kg ranging from 41.8 to 43.5 g/ 10 min.

The MA-g-PE-PP compatibilizers comprising about 80 wt.% of polypropylene and grafted MA content of 0.6 wt.% were found to have a MI₂ as determined ISO 1133-2011 at 190 °C under a load of 2.16 kg ranging from 97.8 to 101.9 g/ 10 min.

The MA-g-PE-PP compatibilizer comprising about 80 wt.% of polypropylene and grafted MA content of 0.6 wt.% was selected to prepare the compositions comprising polypropylene.

The complex viscosity of the MA-g-PE-PP compatibilizer at 0.1 rad/sec at 190 °C comprising about 80 wt.% of polypropylene was determined to be 190 Pa.s.

The complex viscosity of the MA-g-PE-PP compatibilizer at 0.1 rad/sec at 190 °C comprising about 50 wt.% of polypropylene was determined to be 270 Pa.s.

The complex viscosity of the MA-g-PE-PP compatibilizer at 0.1 rad/sec at 190 °C comprising about 20 wt.% of polypropylene was determined to be 320 Pa.s.

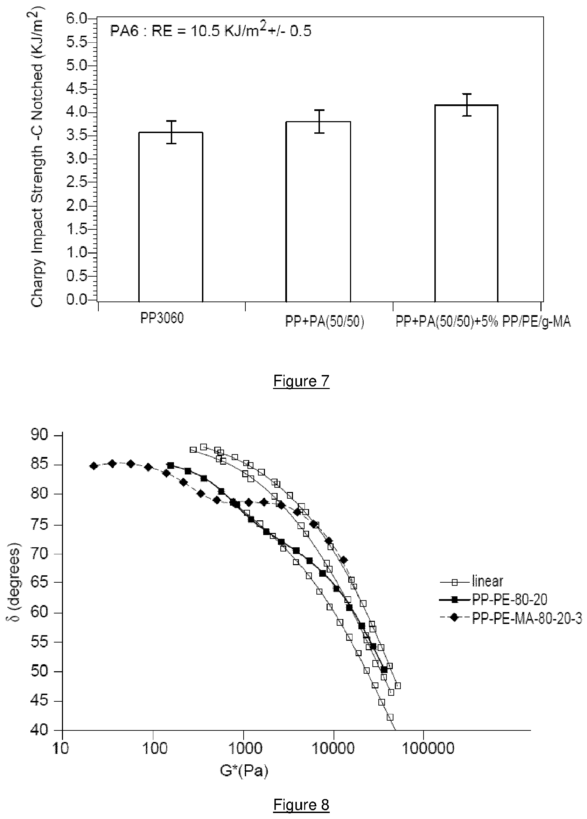

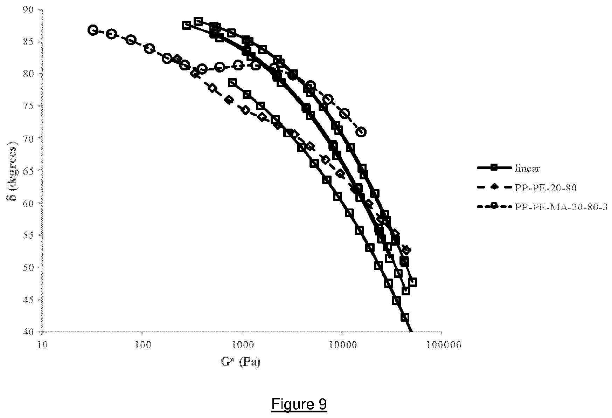

On the Van Gurp Palmen plots provided in figures 8 and 9, one can see a bump, i.e., a change in curvature. This bump is typical of the existence of mechanisms characterized by high relaxation times.

### Example 2 - Preparation of the compositions comprising polypropylene

### PP/PA blends have been prepared with or without compatibilizer

As a "blank" reference, PP and PA are blended without compatibilizer. PP properties alone are also provided as comparative example.

5 wt % of MA-g-PE-PP (i.e., the compatibilizer) were added (substitution of a part of PP); the final composition PP/PA/MA-g-PE-PP thus becomes 45/50/5.

The polypropylene used in the blends was the same as the one used to prepare the inventive compatibilizers (i.e., PP1)
Polyamide was selected as the polymer having a polar functional group. The polyamide used was PA6 AKULON F223D commercially available from DSM with a melt flow volume rate of 44 cm³/ 10 min as determined by ISO 1133 at 260°C under a load of 2.16 kg.

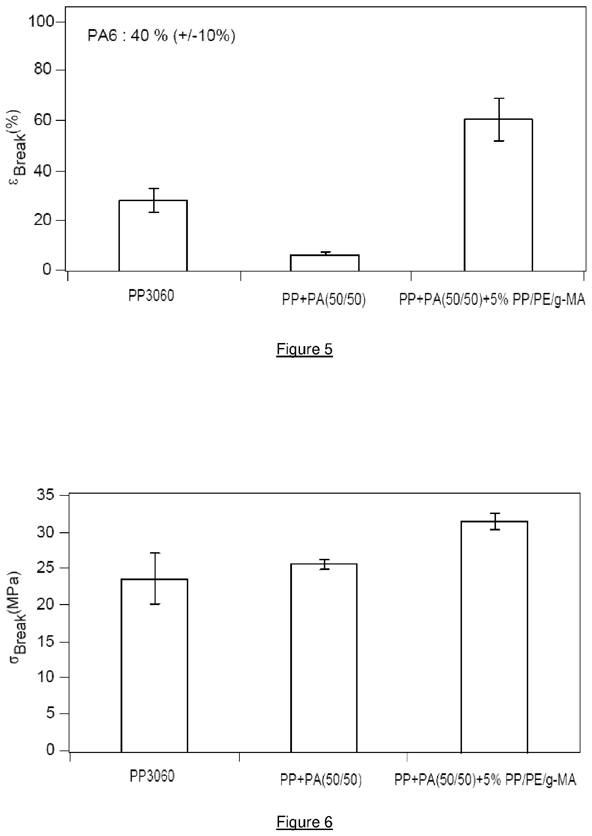

### Mechanical properties have been tested and reported in figures 4 to 7

From the results, it can be seen that the blending of PP with PA without compatibilzer tends to deteriorate the Young Modulus, the Strain at Break by comparison to the PP properties. The Stress at Break and the Impact Strength were improved.

By contrast an improvement in mechanical performances as regards the Young Modulus, the Strain at Break, the Stress at Break and Impact Strength is observed inventive polymer compositions comprising the MA-g-PE-PP compatibilzer. In particular, an improvement in Impact Strength is observed.

## Claims

1. Process to produce a polymer composition comprising
- providing from 10 to 80 wt.% of a component A based on the total weight of the polymer composition; wherein the component A is one or more polypropylene resins;
- providing from 80 to 10 wt.% of a component B based on the total weight of the polymer composition; wherein the component B is one or more materials selected from materials having a polar functional group, polymers having a polar functional group, natural fibres, and any mixture thereof, wherein the one or more polymers having a polar functional group selected from polyamide, ethylene vinyl alcohol, polyester, and any mixture thereof; and wherein the polar functional group is at least one selected from the group consisting of a carboxyl group, a hydroxyl group, an epoxy group, an amino group, an amide group, a silyl group, an acetylacetonato group, and a mercapto group;
- providing from 0.5 to 20 wt.% of a compatibilizer based on the total weight of the polymer composition; wherein the compatibilizer is a grafted blend of polyethylene and polypropylene, and
- melt blending the component A, the component B and the compatibilizer to obtain a polymer composition;
**characterized in that** the compatibilizer is a grafted blend of polyethylene and polypropylene comprising from 5 to 90 wt.% of polyethylene based on the total weight of the compatibilizer, and has:
- a melt index MI₂ ranging from 5.0 to 200.0 g/10 min as determined according to ISO 1133-2011 at 190 °C under a load of 2.16 kg;
- a complex viscosity at 0.1 rad/sec at 190 °C of at most 1,000 Pa.s; and
- a grafting agent content ranging from 0.3 to 5.0 wt.% based on the total weight of the compatibilizer;
and **in that** the step of providing a compatibilizer being a grafted blend of polyethylene and polypropylene further comprises the sub-step of grafting of a blend of polyethylene and polypropylene to produce said compatibilizer, wherein said sub-step comprises
a) providing an extruder with one or more thermal regulation devices;
b) providing a blend of polyethylene and polypropylene;
c) providing a grafting agent in a content ranging from 0.8 to 10.0 wt.% based on the total weight of the blend of polyethylene and polypropylene provided in step (b), wherein the grafting agent comprises at least one double bound per molecule;
d) extruding the blend of polyethylene and polypropylene and the grafting agent to obtain a grafted blend of polyethylene and polypropylene; wherein step (d) of extruding comprises a thermal treatment of the blend of polyethylene and polypropylene at a maximum barrel temperature Ts of at least 315 °C in one or more hot zones of the extruder; and
e) recovering a grafted blend of polyethylene and polypropylene being the compatibilizer wherein the content of polyethylene in the blend provided in step b) is selected to have a compatibilizer comprising from 5 to 90 wt.% of polyethylene based on the total weight of the compatibilizer.

2. The process according to claim 1 is **characterized in that** the compatibilizer has a melt index MI₂ ranging from 20.0 to 160.0 g/10 min as determined according to ISO 1133-2011 at 190 °C under a load of 2.16 kg; preferably from 25.0 to 150.0 g/10 min; more preferably, from 35.0 to 130.0 g/10 min.

3. The process according to claim 1 or 2 is **characterized in that** the component B comprises one or more polymers having a polar functional group, wherein the polar functional group is at least one selected from the group consisting of a carboxyl group, a hydroxyl group, an epoxy group, an amino group, an amide group, a silyl group, an acetylacetonato group, and a mercapto group; with preference, selected from the group consisting of a carboxyl group, a hydroxyl group, an amino group, and an amide group.

4. The process according to any one of claims 1 to 3 is **characterized in that** the component B comprises one or more polymers having a polar functional group are selected from polyamide and/or ethylene vinyl alcohol; preferably, the one or more polymers having a polar functional group are or comprise one or more polyamides selected from PA-6; PA-6,6; PA-6,9; PA-6,10; PA-6,12; PA-11; PA-4,6 and PA-66/6 copolymer; more preferably, the one or more polyamides are or comprise PA-6.

5. The process according to any one of claims 1 to 4 is **characterized in that** the component B comprises one or more materials having a polar functional group selected from cellulose derivative with a hydroxyl group, chitin, natural fibres and any blend thereof; and /or **in that** the one or more polypropylene resins of component A have a melt index (MI₂) ranging from 0.5 to 260.0 g/10 min as determined according to ISO 1133-2011 at 230°C under a load of 2.16 kg; with preference, from 1.5 to 160.0 g/10 min.

6. The process according to any one of claims 1 to 5 is **characterized in that** the grafting agent is present in the compatibilizer at a content ranging from 0.3 to 4.0 wt.% based on the total weight of the compatibilizer; preferably from 0.5 to 2.5 wt.%.

7. The process according to any one of claims 1 to 6 is **characterized in that**, in the sub-step of grafting of a blend of polyethylene and polypropylene to produce said compatibilizer, the polyethylene in the blend of polyethylene and polypropylene is selected to have a high load melt index (HLMI R) of at least 1.0 g/10 min as determined according to ISO 1133-2011 at 190 °C under a load of 21.6 kg, a melt index (MI₂ R) of at most 0.45 g/10 min as determined according to ISO 1133-2011 at 190 °C under a load of 2.16 kg and a density of at least 0.940 g/cm³ as determined according to ISO 1183-1:2012 at 23 °C; or the polyethylene in the blend of polyethylene and polypropylene is selected to have a melt index (MI₂ R) ranging from 0.8 to 1.5 g/10 min as determined according to ISO 1133-2011 at 190 °C under a load of 2.16 kg and a density ranging from 0.910 g/cm³ to 0.930 g/cm³ as determined according to ISO 1183-1:2012 at 23 °C.

8. The process according to claim 7 is **characterized in that** the polypropylene in the blend of polyethylene and polypropylene is selected to have a melt index (MI₂ R) ranging from 0.1 to 20.0 g/10 min as determined according to ISO 1133-2011 at 230 °C under a load of 2.16 kg, preferably ranging from 0.8 to 3.0 g/10 min.

9. The process according to any one of claims 7 or 8 is **characterized in that** the grafting agent comprises or consists of one or more functional monomers selected from maleic anhydride, glycidyl methacrylate, methyl methacrylate, acrylic acid, butyl acrylate, vinyl acetate, diethyl maleate, acrylamide, acrylonitrile, and any mixture thereof; and/or **in that** the grafting agent is provided in a content ranging from 1.5 to 4.0 wt.% based on the total weight of the blend of polyethylene and polypropylene provided on step (b).

10. The process according to any one of claims 1 to 9 is **characterized in that** it comprises
- providing from 40 to 55 wt.% of the component A based on the total weight of the polymer composition;
- providing from 55 to 40 wt.% of the component B based on the total weight of the polymer composition; and
- providing from 0.8 to 5 wt.% of the compatibilizer based on the total weight of the polymer composition.

11. The process according to any one of claims 1 to 10 is **characterized in that** the compatibilizer comprises from 18 to 60 wt.% of polyethylene based on the total weight of the compatibilizer.

12. A compatibilizer being a grafted blend of polyethylene and polypropylene **characterized in that** it comprises from 5 to 90 wt.% of polyethylene based on the total weight of the compatibilizer, and has:
- a melt index MI₂ ranging from 5.0 to 200.0 g/10 min as determined according to ISO 1133-2011 at 190 °C under a load of 2.16 kg;
- a complex viscosity at 0.1 rad/sec at 190 °C of at most 1,000 Pa·s; and
- a grafting agent content ranging from 0.3 to 5.0 wt.% based on the total weight of the compatibilizer
wherein the compatibilizer is produced by the method comprising:
a) providing an extruder with one or more thermal regulation devices;
b) providing a blend of polyethylene and polypropylene;
c) providing a grafting agent in a content ranging from 0.8 to 10.0 wt.% based on the total weight of the blend of polyethylene and polypropylene provided in step (b), wherein the grafting agent comprises at least one double bound per molecule;
d) extruding the blend of polyethylene and polypropylene and the grafting agent to obtain a grafted blend of polyethylene and polypropylene; wherein step (d) of extruding comprises a thermal treatment of the blend of polyethylene and polypropylene at a maximum barrel temperature Ts of at least 315 °C in one or more hot zones of the extruder; and
e) recovering a grafted blend of polyethylene and polypropylene being the compatibilizer wherein the content of polyethylene in the blend provided in step b) is selected to have a compatibilizer comprising from 5 to 90 wt.% of polyethylene based on the total weight of the compatibilizer.

13. The compatibilizer according to claim 12 is **characterized in that** it has a melt index MI₂ ranging from 20.0 to 160.0 g/10 min as determined according to ISO 1133-2011 at 190 °C under a load of 2.16 kg; and/or **in that** it has a grafting agent content ranging from 0.5 to 2.5 wt.% based on the total weight of the compatibilizer.

14. The compatibilizer according to any one of claims 12 or 13 is **characterized in that** it comprises from 18 to 60 wt.% of polyethylene based on the total weight of the compatibilizer.

15. A polymer composition **characterized in that** it comprises the compatibilizer according to any one of claims 12 to 14 and component A being one or more polypropylene and a component B; and **in that** the polymer composition is a composite material and the component B is selected from wood fibres, bamboo fibres, flax fibres, hemp fibres, and any mixture thereof; with preference, the composite material is a wood-plastic composite.

## Patentansprüche

1. Prozess zur Herstellung einer Polymerzusammensetzung, umfassend
- Bereitstellen von 10 bis 80 Gew.-% einer Komponente A, bezogen auf das Gesamtgewicht der Polymerzusammensetzung; wobei die Komponente A ein oder mehrere Polypropylenharze ist;
- Bereitstellen von 80 bis 10 Gew.-% einer Komponente B, bezogen auf das Gesamtgewicht der Polymerzusammensetzung; wobei die Komponente B ein oder mehrere Materialien ist ausgewählt aus Materialien mit einer polaren funktionellen Gruppe, Polymeren mit einer polaren funktionellen Gruppe, Naturfasern und beliebigen Mischungen davon, wobei das eine oder die mehreren Polymere mit einer polaren funktionellen Gruppe ausgewählt sind aus Polyamid, Ethylenvinylalkohol, Polyester und beliebigen Mischungen davon; und wobei die polare funktionelle Gruppe mindestens eine ist ausgewählt aus der Gruppe bestehend aus einer Carboxylgruppe, einer Hydroxylgruppe, einer Epoxidgruppe, einer Aminogruppe, einer Amidgruppe, einer Silylgruppe, einer Acetylacetonatogruppe und einer Mercaptogruppe;
- Bereitstellen von 0,5 bis 20 Gew.-% eines Verträglichkeitsvermittlers, bezogen auf das Gesamtgewicht der Polymerzusammensetzung; wobei der Verträglichkeitsvermittler ein Pfropfblend aus Polyethylen und Polypropylen ist, und
- Schmelzemischen der Komponente A, der Komponente B und des Verträglichkeitsvermittlers, um eine Polymerzusammensetzung zu erhalten;
**dadurch gekennzeichnet, dass** der Verträglichkeitsvermittler ein Pfropfblend aus Polyethylen und Polypropylen umfassend 5 bis 90 Gew.-% Polyethylen, bezogen auf das Gesamtgewicht des Verträglichkeitsvermittlers, ist und Folgendes aufweist:
- einen Schmelzindex MI₂ im Bereich von 5,0 bis 200,0 g/10 min, bestimmt gemäß ISO 1133-2011 bei 190°C unter einer Belastung von 2,16 kg;
- eine komplexe Viskosität bei 0,1 rad/s und 190°C von höchstens 1.000 Pa·s; und
- einen Gehalt an Pfropfmittel im Bereich von 0,3 bis 5,0 Gew.-%, bezogen auf das Gesamtgewicht des Verträglichkeitsvermittlers;
und dadurch, dass der Schritt des Bereitstellens eines Verträglichkeitsvermittlers, bei dem es sich um ein Pfropfblend aus Polyethylen und Polypropylen handelt, ferner den Teilschritt des Pfropfens eines Blends aus Polyethylen und Polypropylen zur Herstellung des Verträglichkeitsvermittlers umfasst, wobei der Teilschritt Folgendes umfasst
a) Bereitstellen eines Extruders mit einer oder mehreren Temperaturregelungsvorrichtungen;
b) Bereitstellen eines Blends aus Polyethylen und Polypropylen;
c) Bereitstellen eines Pfropfmittels in einem Gehalt im Bereich von 0,8 bis 10,0 Gew.-%, bezogen auf das Gesamtgewicht des in Schritt (b) bereitgestellten Blends aus Polyethylen und Polypropylen, wobei das Pfropfmittel mindestens eine Doppelbindung pro Molekül umfasst;
d) Extrudieren des Blends aus Polyethylen und Polypropylen sowie des Pfropfmittels, um ein Pfropfblend aus Polyethylen und Polypropylen zu erhalten; wobei Schritt (d) des Extrudierens eine Wärmebehandlung des Blends aus Polyethylen und Polypropylen bei einer maximalen Zylindertemperatur Ts von mindestens 315°C in einer oder mehreren Heizzonen des Extruders umfasst; und
e) Rückgewinnen eines Pfropfblends aus Polyethylen und Polypropylen, bei dem es sich um den Verträglichkeitsvermittler handelt, wobei der Gehalt an Polyethylen in dem in Schritt b) bereitgestellten Blend so gewählt wird, dass ein Verträglichkeitsvermittler 5 bis 90 Gew.-% Polyethylen, bezogen auf das Gesamtgewicht des Verträglichkeitsvermittlers, umfasst.

2. Prozess nach Anspruch 1, **dadurch gekennzeichnet, dass** der Verträglichkeitsvermittler einen Schmelzindex MI₂ im Bereich von 20,0 bis 160,0 g/10 min aufweist, bestimmt gemäß ISO 1133-2011 bei 190°C unter einer Belastung von 2,16 kg; vorzugsweise von 25,0 bis 150,0 g/10 min; noch bevorzugter von 35,0 bis 130,0 g/10 min.

3. Prozess nach Anspruch 1 oder 2, **dadurch gekennzeichnet, dass** die Komponente B ein oder mehrere Polymere mit einer polaren funktionellen Gruppe umfasst, wobei die polare funktionelle Gruppe mindestens eine ist ausgewählt aus der Gruppe bestehend aus einer Carboxylgruppe, einer Hydroxylgruppe, einer Epoxidgruppe, einer Aminogruppe, einer Amidgruppe, einer Silylgruppe, einer Acetylacetonatogruppe und einer Mercaptogruppe; vorzugsweise ausgewählt aus der Gruppe bestehend aus einer Carboxylgruppe, einer Hydroxylgruppe, einer Aminogruppe und einer Amidgruppe.

4. Prozess nach einem der Ansprüche 1 bis 3, **dadurch gekennzeichnet, dass** die Komponente B ein oder mehrere Polymere mit einer polaren funktionellen Gruppe ausgewählt aus Polyamid und/oder Ethylenvinylalkohol umfasst; wobei vorzugsweise das eine oder die mehreren Polymere mit einer polaren funktionellen Gruppe ein oder mehrere Polyamide ausgewählt aus PA-6; PA-6,6; PA-6,9; PA-6,10; PA-6,12; PA-11; PA-4,6 und PA-66/6-Copolymer sind oder umfassen; wobei noch bevorzugter das eine oder die mehreren Polyamide PA-6 sind oder umfassen.

5. Prozess nach einem der Ansprüche 1 bis 4, **dadurch gekennzeichnet, dass** die Komponente B ein oder mehrere Materialien mit einer polaren funktionellen Gruppe ausgewählt aus Cellulosederivaten mit einer Hydroxylgruppe, Chitin, Naturfasern und beliebigen Blends davon umfasst; und/oder dadurch, dass das eine oder die mehreren Polypropylenharze der Komponente A einen Schmelzindex (MI₂) im Bereich von 0,5 bis 260,0 g/10 min, bestimmt gemäß ISO 1133-2011 bei 230°C unter einer Belastung von 2,16 kg; vorzugsweise von 1,5 bis 160,0 g/10 min, aufweisen.

6. Prozess nach einem der Ansprüche 1 bis 5, **dadurch gekennzeichnet, dass** das Pfropfmittel in dem Verträglichkeitsvermittler in einem Gehalt im Bereich von 0,3 bis 4,0 Gew.-%, bezogen auf das Gesamtgewicht des Verträglichkeitsvermittlers; vorzugsweise von 0,5 bis 2,5 Gew.-%, vorliegt.

7. Prozess nach einem der Ansprüche 1 bis 6, **dadurch gekennzeichnet, dass** in dem Teilschritt des Pfropfens eines Blends aus Polyethylen und Polypropylen zur Herstellung des Verträglichkeitsvermittlers das Polyethylen in dem Blend aus Polyethylen und Polypropylen so gewählt wird, dass es einen hohen Lastschmelzindex (HLMI R) von mindestens 1,0 g/10 min, bestimmt gemäß ISO 1133-2011 bei 190°C unter einer Belastung von 21,6 kg, einen Schmelzindex (MI₂ R) von höchstens 0,45 g/10 min, bestimmt gemäß ISO 1133-2011 bei 190°C unter einer Belastung von 2,16 kg, und eine Dichte von mindestens 0,940 g/cm³ , bestimmt gemäß ISO 1183-1:2012 bei 23°C, aufweist; oder das Polyethylen in dem Blend aus Polyethylen und Polypropylen so gewählt wird, dass es einen Schmelzindex (MI₂ R) im Bereich von 0,8 bis 1,5 g/10 min, bestimmt gemäß ISO 1133-2011 bei 190°C unter einer Belastung von 2,16 kg, und eine Dichte im Bereich von 0,910 g/cm³ bis 0,930 g/cm³, bestimmt gemäß ISO 1183-1:2012 bei 23°C, aufweist.

8. Prozess nach Anspruch 7, **dadurch gekennzeichnet, dass** das Polypropylen in dem Blend aus Polyethylen und Polypropylen so gewählt wird, dass es einen Schmelzindex (MI₂ R) im Bereich von 0,1 bis 20,0 g/10 min, bestimmt gemäß ISO 1133-2011 bei 230°C unter einer Belastung von 2,16 kg, vorzugsweise im Bereich von 0,8 bis 3,0 g/10 min, aufweist.

9. Prozess nach einem der Ansprüche 7 oder 8, **dadurch gekennzeichnet, dass** das Pfropfmittel ein oder mehrere funktionelle Monomere ausgewählt aus Maleinsäureanhydrid, Glycidylmethacrylat, Methylmethacrylat, Acrylsäure, Butylacrylat, Vinylacetat, Diethylmaleat, Acrylamid, Acrylnitril und beliebigen Mischungen davon umfasst oder daraus besteht; und/oder dadurch, dass das Pfropfmittel in einem Gehalt im Bereich von 1,5 bis 4,0 Gew.-%, bezogen auf das Gesamtgewicht des in Schritt (b) bereitgestellten Blends aus Polyethylen und Polypropylen, vorliegt.

10. Prozess einem der Ansprüche 1 bis 9, **dadurch gekennzeichnet, dass** er Folgendes umfasst
- Bereitstellen von 40 bis 55 Gew.-% der Komponente A, bezogen auf das Gesamtgewicht der Polymerzusammensetzung;
- Bereitstellen von 55 bis 40 Gew.-% der Komponente B, bezogen auf das Gesamtgewicht der Polymerzusammensetzung;
- Bereitstellen von 0,8 bis 5 Gew.-% des Verträglichkeitsvermittlers, bezogen auf das Gesamtgewicht der Polymerzusammensetzung.

11. Prozess nach einem der Ansprüche 1 bis 10, **dadurch gekennzeichnet, dass** der Verträglichkeitsvermittler 18 bis 60 Gew.-% Polyethylen, bezogen auf das Gesamtgewicht des Verträglichkeitsvermittlers, umfasst.

12. Verträglichkeitsvermittler, bei dem es sich um ein Pfropfblend aus Polyethylen und Polypropylen handelt, **dadurch gekennzeichnet, dass** er 5 bis 90 Gew.-% Polyethylen, bezogen auf das Gesamtgewicht des Verträglichkeitsvermittlers, umfasst, und Folgendes aufweist:
- einen Schmelzindex MI₂ im Bereich von 5,0 bis 200,0 g/10 min, bestimmt gemäß ISO 1133-2011 bei 190°C unter einer Belastung von 2,16 kg;
- eine komplexe Viskosität bei 0,1 rad/s und 190°C von höchstens 1.000 Pa·s; und
- einen Gehalt an Pfropfmittel im Bereich von 0,3 bis 5,0 Gew.-%, bezogen auf das Gesamtgewicht des Verträglichkeitsvermittlers,
wobei der Verträglichkeitsvermittler nach dem Verfahren hergestellt wird, das Folgendes umfasst:
a) Bereitstellen eines Extruders mit einer oder mehreren Temperaturregelungsvorrichtungen;
b) Bereitstellen eines Blends aus Polyethylen und Polypropylen;
c) Bereitstellen eines Pfropfmittels in einem Gehalt von 0,8 bis 10,0 Gew.-%, bezogen auf das Gesamtgewicht des in Schritt (b) bereitgestellten Blends aus Polyethylen und Polypropylen, wobei das Pfropfmittel mindestens eine Doppelbindung pro Molekül umfasst;
d) Extrudieren des Blends aus Polyethylen und Polypropylen sowie des Pfropfmittels, um ein Pfropfblend aus Polyethylen und Polypropylen zu erhalten; wobei Schritt (d) des Extrudierens eine Wärmebehandlung des Blends aus Polyethylen und Polypropylen bei einer maximalen Zylindertemperatur Ts von mindestens 315°C in einer oder mehreren Heizzonen des Extruders umfasst; und
e) Rückgewinnen eines Pfropfblends aus Polyethylen und Polypropylen, bei dem es sich um den Verträglichkeitsvermittler handelt, wobei der Gehalt an Polyethylen in dem in Schritt b) bereitgestellten Blend so gewählt wird, dass ein Verträglichkeitsvermittler 5 bis 90 Gew.-% Polyethylen, bezogen auf das Gesamtgewicht des Verträglichkeitsvermittlers, umfasst.

13. Verträglichkeitsvermittler nach Anspruch 12, **dadurch gekennzeichnet, dass** er einen Schmelzindex MI₂ im Bereich von 20,0 bis 160,0 g/10 min aufweist, bestimmt gemäß ISO 1133-2011 bei 190°C unter einer Belastung von 2,16 kg; und/oder dass er einen Gehalt an Pfropfmittel im Bereich von 0,5 bis 2,5 Gew.-%, bezogen auf das Gesamtgewicht des Verträglichkeitsvermittlers, aufweist.

14. Verträglichkeitsvermittler nach einem der Ansprüche 12 bis 13, **dadurch gekennzeichnet, dass** er 18 bis 60 Gew.-% Polyethylen, bezogen auf das Gesamtgewicht des Verträglichkeitsvermittlers, umfasst.

15. Polymerzusammensetzung, **dadurch gekennzeichnet, dass** sie den Verträglichkeitsvermittler nach einem der Ansprüche 12 bis 14 sowie Komponente A, bei der es sich um ein oder mehrere Polypropylene handelt, und eine Komponente B umfasst; und dadurch, dass die Polymerzusammensetzung ein Verbundwerkstoff ist und die Komponente B ausgewählt ist aus Holzfasern, Bambusfasern, Flachsfasern, Hanffasern und beliebigen Mischungen davon; vorzugsweise ist der Verbundwerkstoff ein Holz-Kunststoff-Verbundwerkstoff.

## Revendications

1. Procédé pour produire une composition de polymère, comprenant
- la fourniture de 10 à 80 % en poids, par rapport au poids total de la composition de polymère, d'un composant A ; lequel composant A consiste en une ou plusieurs résines de polypropylène ;
- la fourniture de 80 à 10 % en poids, par rapport au poids total de la composition de polymère, d'un composant B ; lequel composant B consiste en un ou plusieurs matériaux choisis parmi les matériaux ayant un groupe fonctionnel polaire, les polymères ayant un groupe fonctionnel polaire, les fibres naturelles, et l'un quelconque de leurs mélanges, lesquels un ou plusieurs polymères ayant un groupe fonctionnel polaire sont choisis parmi le polyamide, l'éthylène-alcool vinylique, le polyester, et l'un quelconque de leurs mélanges ; et lequel groupe fonctionnel polaire est au moins l'un choisi dans l'ensemble constitué par un groupe carboxyle, un groupe hydroxyle, un groupe époxy, un groupe amino, un groupe amide, un groupe silyle, un groupe acétylacétonate, et un groupe mercapto ;
- la fourniture de 0,5 à 20 % en poids, par rapport au poids total de la composition de polymère, d'un agent de compatibilité ; lequel agent de compatibilité est un mélange greffé de polyéthylène et de polypropylène, et
- le mélange à l'état fondu du composant A, du composant B et de l'agent de compatibilité pour que soit obtenue une composition de polymère ;
**caractérisée en ce que** l'agent de compatibilité est un mélange greffé de polyéthylène et de polypropylène comprenant de 5 à 90 % en poids, par rapport au poids total de l'agent de compatibilité, de polyéthylène ; et présente :
- un indice de fusion MI₂, tel que déterminé conformément à la norme ISO 1133-2011 à 190 °C et sous une charge de 2,16 kg, situé dans la plage allant de 5,0 à 200,0 g/10 min ;
- une viscosité complexe, à 0,1 rad/s et à 190 °C, d'au plus 1 000 Pa·s ; et
- une teneur en agent de greffage située dans la plage allant de 0,3 à 5,0 % en poids par rapport au poids total de l'agent de compatibilité ;
et **en ce que** l'étape de fourniture d'un agent de compatibilité qui est un mélange greffé de polyéthylène et de polypropylène comprend en outre la sous-étape de greffage d'un mélange de polyéthylène et de polypropylène pour produire ledit agent de compatibilité, laquelle sous-étape comprend
a) la fourniture d'une extrudeuse dotée d'un ou plusieurs dispositifs de régulation thermique ;
b) la fourniture d'un mélange de polyéthylène et de polypropylène ;
c) la fourniture d'un agent de greffage en une teneur située dans la plage allant de 0,8 à 10,0 % en poids par rapport au poids total du mélange de polyéthylène et de polypropylène fourni à l'étape (b), lequel agent de greffage comprend au moins une double liaison par molécule ;
d) l'extrusion du mélange de polyéthylène et de polypropylène et de l'agent de greffage pour que soit obtenu un mélange greffé de polyéthylène et de polypropylène ; laquelle étape (d) d'extrusion comprend un traitement thermique du mélange de polyéthylène et de polypropylène à une température de cylindre maximale Ts d'au moins 315 °C dans une ou plusieurs zones chaudes de l'extrudeuse ; et
e) la récupération d'un mélange greffé de polyéthylène et de polypropylène qui est l'agent de compatibilité, dans lequel la teneur en polyéthylène du le mélange fourni à l'étape b) est choisi de façon que soit obtenu un agent de compatibilité comprenant 5 à 90 % en poids, par rapport au poids total de l'agent de compatibilité, de polyéthylène.

2. Procédé selon la revendication 1, **caractérisé en ce que** l'agent de compatibilité présente un indice de fusion MI₂, tel que déterminé conformément à la norme ISO 1133-2011 à 190 °C et sous une charge de 2,16 kg, situé dans la plage allant de 20,0 à 160,0 g/10 min ; de préférence de 25,0 à 150,0 g/10 min ; mieux encore de 35,0 à 130,0 g/10 min.

3. Procédé selon la revendication 1 ou 2, **caractérisé en ce que** le composant B comprend un ou plusieurs polymères ayant un groupe fonctionnel polaire, dans lequel le groupe fonctionnel polaire est au moins l'un choisi dans l'ensemble constitué par un groupe carboxyle, un groupe hydroxyle, un groupe époxy, un groupe amino, un groupe amide, un groupe silyle, un groupe acétylacétonate et un groupe mercapto ; de préférence choisi dans l'ensemble constitué par un groupe carboxyle, un groupe hydroxyle, un groupe amino et un groupe amide.

4. Procédé selon l'une quelconque des revendications 1 à 3, **caractérisé en ce que** le composant B comprend un ou plusieurs polymères ayant un groupe fonctionnel polaire choisis parmi le polyamide et/ou l'éthylène-alcool vinylique ; de préférence le ou les polymères ayant un groupe fonctionnel polaire sont ou comprennent un ou plusieurs polyamides choisis parmi les copolymères PA-6 ; PA-6,6 ; PA-6,9 ; PA-6,10 ; PA-6,12 ; PA-11 ; PA-4,6 et PA-66/6 ; mieux encore le ou les polyamides sont ou comprennent le PA-6.

5. Procédé selon l'une quelconque des revendications 1 à 4, **caractérisé en ce que** le composant B comprend un ou plusieurs matériaux ayant un groupe fonctionnel polaire, choisis parmi un dérivé de cellulose possédant un groupe hydroxyle, la chitine, les fibres naturelles et l'un quelconque de leurs mélanges ; et/ou **en ce que** la ou les résines de polypropylène du composant A présentent un indice de fusion (MI₂), tel que déterminé conformément à la norme ISO 1133-2011 à 230 °C et sous une charge de 2,16 kg, situé dans la plage allant de 0,5 à 260,0 g/10 min, de préférence de 1,5 à 160,0 g/10 min.

6. Procédé selon l'une quelconque des revendications 1 à 5, **caractérisé en ce que** l'agent de greffage est présent dans l'agent de compatibilité en une teneur située dans la plage allant de 0,3 à 4,0 % en poids, de préférence de 0,5 à 2,5 % en poids, par rapport au poids total de l'agent de compatibilité.

7. Procédé selon l'une quelconque des revendications 1 à 6, **caractérisé en ce que**, dans la sous-étape de greffage d'un mélange de polyéthylène et de polypropylène pour produire ledit agent de compatibilité, le polyéthylène dans le mélange de polyéthylène et de polypropylène est choisi de façon à présenter un indice de fusion sous forte charge (HLMI R), tel que déterminé conformément à la norme ISO 1133-2011 à 190 °C et sous une charge de 21,6 kg, d'au moins 1,0 g/10 min, un indice de fusion (MI₂ R), tel que déterminé conformément à la norme ISO 1133-2011 à 190 °C et sous une charge de 2,16 kg, d'au plus 0,45 g/10 min, et une masse volumique, telle que déterminée conformément à la norme ISO 1183-1:2012 à 23 °C, d'au moins 0,940 g/cm³ ; ou le polyéthylène dans le mélange de polyéthylène et de polypropylène est choisi de façon à présenter un indice de fusion (MI₂ R), tel que déterminé conformément à la norme ISO 1133-2011 à 190 °C et sous une charge de 2,16 kg, situé dans la plage allant de 0,8 à 1,5 g/10 min, et une masse volumique, telle que déterminée conformément à la norme ISO 1183-1:2012 à 23 °C, de 0,910 g/cm³ à 0,930 g/cm³.

8. Procédé selon la revendication 7, **caractérisé en ce que** le polypropylène dans le mélange de polyéthylène et de polypropylène est choisi de façon à présenter un indice de fusion (MI₂ R), tel que déterminé conformément à la norme ISO 1133-2011 à 230 °C et sous une charge de 2,16 kg, situé dans la plage allant de 0,1 à 20,0 g/10 min, de préférence situé dans la plage allant de 0,8 à 3,0 g/10 min.

9. Procédé selon l'une quelconque des revendications 7 et 8, **caractérisé en ce que** l'agent de greffage comprend ou consiste en un ou plusieurs monomères fonctionnels choisis parmi l'anhydride maléique, le méthacrylate de glycidyle, le méthacrylate de méthyle, l'acide acrylique, l'acrylate de butyle, l'acétate de vinyle, le maléate de diéthyle, l'acrylamide, l'acrylonitrile, et l'un quelconque de leurs mélanges ; et/ou **en ce que** l'agent de greffage est fourni en une teneur située dans la plage allant de 1,5 à 4,0 % en poids par rapport au poids total du mélange de polyéthylène et de polypropylène fourni à l'étape (b).

10. Procédé selon l'une quelconque des revendications 1 à 9, **caractérisé en ce qu'**il comprend
- la fourniture de 40 à 55 % en poids, par rapport au poids total de la composition de polymère, du composant A ;
- la fourniture de 55 à 40 % en poids, par rapport au poids total de la composition de polymère, du composant B ; et
- la fourniture de 0,8 à 5 % en poids, par rapport au poids total de la composition de polymère, de l'agent de compatibilité.

11. Procédé selon l'une quelconque des revendications 1 à 10, **caractérisé en ce que** l'agent de compatibilité comprend de 18 à 60 % en poids, par rapport au poids total de l'agent de compatibilité, de polyéthylène.

12. Agent de compatibilité qui est un mélange greffé de polyéthylène et de polypropylène, **caractérisé en ce qu'**il comprend de 5 à 90 % en poids, par rapport au poids total de l'agent de compatibilité, de polyéthylène, et **en ce qu'**il présente :
- un indice de fusion MI₂, tel que déterminé conformément à la norme ISO 1133-2011 à 190 °C et sous une charge de 2,16 kg, situé dans la plage allant de 5,0 à 200,0 g/10 min ;
- une viscosité complexe, à 0,1 rad/s et à 190 °C, d'au plus 1 000 Pa·s ; et
- une teneur en agent de greffage située dans la plage allant de 0,3 à 5,0 % en poids par rapport au poids total de l'agent de compatibilité ;
lequel agent de compatibilité est produit par la méthode comprenant :
a) la fourniture d'une extrudeuse dotée d'un ou plusieurs dispositifs de régulation thermique ;
b) la fourniture d'un mélange de polyéthylène et de polypropylène ;
c) la fourniture d'un agent de greffage en une teneur située dans la plage allant de 0,8 à 10,0 % en poids par rapport au poids total du mélange de polyéthylène et de polypropylène fourni à l'étape (b), lequel agent de greffage comprend au moins une double liaison par molécule ;
d) l'extrusion du mélange de polyéthylène et de polypropylène et de l'agent de greffage pour que soit obtenu un mélange greffé de polyéthylène et de polypropylène ; laquelle étape (d) d'extrusion comprend un traitement thermique du mélange de polyéthylène et de polypropylène à une température de cylindre maximale Ts d'au moins 315 °C dans une ou plusieurs zones chaudes de l'extrudeuse ; et
e) la récupération d'un mélange greffé de polyéthylène et de polypropylène qui est l'agent de compatibilité, dans lequel la teneur en polyéthylène du mélange fourni à l'étape b) est choisie de façon que soit obtenu un agent de compatibilité comprenant 5 à 90 % en poids, par rapport au poids total de l'agent de compatibilité, de polyéthylène.

13. Agent de compatibilité selon la revendication 12, **caractérisé en ce qu'**il présente un indice de fusion MI₂, tel que déterminé conformément à la norme ISO 1133-2011 à 190 °C et sous une charge de 2,16 kg, situé dans la plage allant de 20,0 à 160,0 g/10 min ; et/ou **en ce qu'**il possède une teneur en agent de greffage située dans la plage allant de 0,5 à 2,5 % en poids par rapport au poids total de l'agent de compatibilité.

14. Agent de compatibilité selon l'une quelconque des revendications 12 et 13, **caractérisé en ce qu'**il comprend de 18 à 60 % en poids, par rapport au poids total de l'agent de compatibilité, de polyéthylène.

15. Composition de polymère **caractérisée en ce qu'**elle comprend l'agent de compatibilité selon l'une quelconque des revendications 12 à 14 et un composant A qui est un ou plusieurs polypropylènes et un composant B ; et **en ce que** la composition de polymère est un matériau composite et le composant B est choisi parmi les fibres de bois, les fibres de bambou, les fibres de lin, les fibres de chanvre, et l'un quelconque de leurs mélanges ; de préférence le matériau composite est un composite bois-plastique.
